# EUROPEAN PATENT SPECIFICATION

(11) **EP 2 727 827 B1**
(45) Date of publication and mention of the grant of the patent: **29.05.2019**
(21) Application number: 13189783.7
(22) Date of filing: 22.10.2013
(51) Int. Cl.: B64C 3/56, B64C 23/06, B64C 3/54

(54) **Horizontal folding wingtip**
Horizontal faltbare Flügelspitze
Bout de l'aile pliable de manière horizontale

(30) Priority: 30.10.2012 US 201261720351 P; 10.08.2013 US 201313964072; 30.10.2012 US 201313664416
(43) Date of publication of application: 07.05.2014
(73) Proprietor: The Boeing Company, Chicago, IL 60606-1596 (US)
(72) Inventor: Santini, Gregory M, Chicago, IL Illinois 60606-2016 (US); Sakurai, Seiya, Chicago, IL Illinois 60606-2016 (US)
(74) Representative: Boult Wade Tennant LLP

(56) References cited:
- GB-A- 651 436
- US-A- 1 718 617
- US-A- 4 336 914
- US-A1- 2002 066 825

## Description

### FIELD OF THE DISCLOSURE

This disclosure relates to systems and methods for providing wings, and more specifically, to systems and methods for providing wings to enhance aircraft performance.

### BACKGROUND OF THE DISCLOSURE

In today's commercial transport industry, it is highly desirable to design aircraft configurations that yield reduced fuel burn per seat-mile, as fuel burn per seat-mile is a metric of fuel efficiency. Efficient aircraft configurations are ever more important as fuel costs increase. Aircraft aerodynamic drag and fuel burn are generally reduced as the aspect ratio of the aircraft wing increases. Similarly, operating larger aircraft, carrying more passengers and payload, are generally more efficient between two destinations than flying several more trips with smaller aircraft. Thus, larger aircraft and aircraft with longer wingspans tend to be more efficient than aircraft with smaller wingspans. However, taxiway spacing and gate locations for most airports were established to accommodate aircraft with a certain wingspan.

Some attempts have been made to improve aircraft wing efficiency without adding wingspan. Winglets extending vertically from the wingtips have improved aircraft fuel efficiency without significantly increasing wingspan. However, the efficiency added by winglets may not be beneficial as that provided by extending the wingspan.

Thus, a need exists to provide an aircraft that can benefit from a long wingspan in flight, while being able to reduce the wingspan while operating at an airport.

GB-A-651,436 relates to an aircraft that includes complementary main and subsidiary horizontal aerofoil surfaces so mounted as to be capable of relative movement from a position in which they conjointly constitute a single lifting surface of low aspect ratio into a separated position in which they form main and subsidiary horizontal aerofoil surfaces, the main aerofoil surface when separated from the subsidiary surface having an aspect ratio and effective span larger than when the surfaces were combined.

US-A-1,718,617 relates to an aeroplane with wing sections which can be folded back parallel with and close to the body. The document is considered as being the closest prior art and shows the features of the preamble of claim 1.

US-A-4,336,914 relates to a deployable wing assembly using an inner wing segment and an outer wing segment. The inner wing segment is hinged longitudinally to the body of a missile, or the like, and with the outer wing segment hinged by a pin perpendicular to the surface of the wing segments at the junction, and including deploying and locking arrangements for both sections.

US-A1-2002/066825 relates to a spacecraft carrying a number of pods, each containing an aircraft that has been folded to fit in the pod. Each aircraft has a vertical stabilizer and outboard wing-portions that fold around fore-and-aft axes. Each aircraft also has a fuselage that folds around a lateral axis. The spacecraft releases one or more of the pods into an atmosphere.

### SUMMARY

Illustrative embodiments provide for an apparatus of an aircraft, the apparatus may include a wing comprising an unfixed portion and a fixed portion. The unfixed portion movably may connect to the fixed portion. The unfixed portion may include a rotating portion to rotate the unfixed portion between a flight position and a folded position. The fixed portion may connect to the unfixed portion of the wing. A joint may allow rotation of the unfixed portion of the wing with respect to the fixed portion of the wing about a rotation axis.

Illustrative embodiments provide for a method of folding a wing that may include the unfixed portion and the fixed portion. The method may include actuating a fold actuator connected to the unfixed portion and the fixed portion; and rotating about a joint, a rotating portion of the unfixed portion between a flight position and a folded position, and simultaneously rotating, about a substantially horizontal axis with respect to rotating portion, a drop portion of the unfixed portion. Rotating the unfixed portion may be about a rotation axis of the joint, the rotation axis being one or more of: substantially vertical and substantially perpendicular to a span of the wing. Unblocking the rotating portion and providing space for the unfixed portion to fold next to the fixed portion, may be caused via a link moving the drop portion of the unfixed portion, may be included in the method. The method may also include moving the drop portion of the unfixed portion of the wing about a horizontal axis of the unfixed portion of the wing with respect to the unfixed portion of the wing via a hinge.

According to an aspect, there is provided an apparatus for an aircraft as in claim 1. Preferably the apparatus further comprises a track extension of the first member configured to fit into a track of the fixed portion, and support and guide the first member in: the flight position, the folded position, and transition between the flight position and the folded position; and the fold actuator connection point configured to: connect the rotating portion to a fold actuator, provide a stiffness that allows the rotating portion to move, and form an extension of the second member.

Advantageously the apparatus further comprises a drop portion configured to move to a location that: unblocks the rotating portion, and provides space for the unfixed portion to fold next to the fixed portion. Preferably the apparatus further comprises a first hinge member of the rotating portion configured to allow movement of the drop portion with respect to the rotating portion; a second hinge member of the drop portion configured to allow movement of the drop portion with respect to the rotating portion; a first connection point of the drop portion configured to connect the drop portion to a first end of a link; the first connection point configured to provide at least one of: stiffness, and rigidity, to cause the drop portion to move responsive to movement of the rotating portion; and a second connection point of the fixed portion, the second connection point connected to a second end of the link and configured to provide at least one of: stiffness, and rigidity, to cause the drop portion to move, responsive to movement of the rotating portion. Preferably the apparatus further comprises a hinge configured to allow movement of the drop portion of the unfixed portion of the wing about a substantially horizontal axis of the unfixed portion of the wing with respect to the unfixed portion of the wing, the hinge comprising: the first hinge member configured to connect the rotating portion to the drop portion; the second hinge member configured to connect the drop portion to the rotating portion; a first surface of the drop portion; and a second surface of the drop portion, the second surface configured to connect the drop portion to the link, the second surface being larger than the first surface; and the link configured to cause rotation of the drop portion with respect to the rotating portion during transition between the folded position and the flight position.

According to a further aspect, there is provided a method of folding a wing of an aircraft as in claim 5.

Advantageously the method further comprises supporting a track extension of a first member in a track of the fixed portion; and guiding, via the track, the first member transitioning between the flight position and the folded position.

Advantageously the method further comprises providing, via a fold actuator connection point, a stiffness that allows the fold actuator to rotate the rotating portion, the fold actuator connection point being an extension of a second member.

Advantageously the method further comprises unblocking the rotating portion and providing space for the unfixed portion to fold next to the fixed portion, via a link moving the drop portion of the unfixed portion, the link being connected to the drop portion and to the fixed portion.

Advantageously the method further comprises allowing, via a first hinge member of the rotating portion, movement of the drop portion with respect to the rotating portion; allowing, via a second hinge member of the drop portion, movement of the drop portion with respect to the rotating portion; causing, responsive to movement of the rotating portion, the drop portion to move via at least one of: a stiffness, and a rigidity of a first end of a link; and providing, via a second connection point to a second end of the link, at least one of: stiffness, and rigidity, causing the drop portion to move responsive to movement of the rotating portion.

Advantageously the method further comprises moving, responsive to actuating the fold actuator, via a hinge, the drop portion of the unfixed portion of the wing about the substantially horizontal axis of the unfixed portion of the wing with respect to the unfixed portion of the wing, such that the hinge comprises: the first hinge member connected to the rotating portion, and the second hinge member connected to the drop portion.

Advantageously the method further comprises moving, via a link being connected to a second surface of the drop portion, the second surface of the drop portion, the second surface being larger than a first surface of the drop portion and comprising a first connection point to a first end of the link.

Advantageously the method further comprises rotating, during transition between the folded position and the flight position, via a link, the drop portion with respect to the rotating portion.

Advantageously the method further comprises causing, via an angle of a link with respect to the drop portion, a force from moving the rotating portion from the flight position to the folded position, the link and the drop portion to move and unblock the rotating portion moving to the folded position.

Advantageously the method further comprises rotating, as the wing transitions between the folded position and the flight position, via a link rotation axis of a link between a first end of the link and a second end of the link, the drop portion by rotation of a first connection point with respect to a second connection point, the first end of the link being connected to the drop portion, and the second end of the link being connected to the fixed portion.

Advantageous embodiments provide for a system configured to improve a fuel efficiency of an aircraft, the system comprising an expanded wingspan for the aircraft; a reduced wingspan for the aircraft that allows ground operation of the aircraft at an airport that prohibits ground operation of aircraft with the expanded wingspan; and a drop portion configured to allow an unfixed portion of a wing of the aircraft to rotate horizontally back toward a tail of the aircraft.

Advantageously the system is configured to be actuated by a single actuator configured to exert a first force, the first force being less force than a second force used to raise the unfixed portion of the wing vertically.

Advantageously the system further comprises an apparatus comprising the wing comprising the unfixed portion and a fixed portion; the unfixed portion movably connected to the fixed portion, the unfixed portion comprising a rotating portion of the unfixed portion configured to rotate between a flight position and a folded position; the fixed portion connected to the unfixed portion of the wing; a joint configured to allow rotation of the unfixed portion of the wing with respect to the fixed portion of the wing about a rotation axis, the rotation axis being one or more of vertical, substantially perpendicular to the wing, and substantially parallel to a yaw axis of the aircraft; a first member of the rotating portion configured to support the unfixed portion, connect the unfixed portion to the fixed portion, and slide into a third member of the fixed portion; a second member of the rotating portion comprising a first hinge member, a fold actuator connection point, and a first joint member; the first hinge member configured to allow: movement of the drop portion of the unfixed portion with respect to the rotating portion of the unfixed portion; the first joint member configured to allow for rotation of the rotating portion about the rotation axis of the joint and connect to a second joint member of the fixed portion; the third member of the fixed portion configured to support the first member in the flight position; and a fourth member of the fixed portion configured to support the second member in the flight position; a track extension of the first member configured to fit into a track of the fixed portion, and support and guide the first member in: the flight position, the folded position, and transition between the flight position and the folded position; the fold actuator connection point configured to: connect the rotating portion to a fold actuator, provide a stiffness that allows the rotating portion to move, and form an extension of the second member; the drop portion configured to move to a location that unblocks the rotating portion and provides space for the unfixed portion to fold next to the fixed portion; a second hinge member of the drop portion configured to allow movement of the drop portion with respect to the rotating portion; a first connection point of the drop portion configured to connect the drop portion to a first end of a link; the first connection point configured to provide at least one of: stiffness, and rigidity, to cause the drop portion to move responsive to movement of the rotating portion; a second connection point of the fixed portion, the second connection point connected to a second end of the link and configured to provide at least one of: stiffness, and rigidity, to cause the drop portion to move responsive to movement of the rotating portion; and the link configured to cause rotation of the drop portion with respect to the rotating portion during transition between the folded position and the flight position.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is a diagram of an aircraft embodying a wing fold controller of a wing fold system in a flight position in accordance with an illustrative embodiment;
**Figure 2** is a diagram of an aircraft embodying a wing fold controller of a wing fold system in a folded position in accordance with an illustrative embodiment;
**Figure 3** is a block diagram of a wing of an aircraft with a wing fold system in accordance with an illustrative embodiment;
**Figure 4** is a block diagram of the unfixed portion of a wing of an aircraft with a wing fold system in accordance with an illustrative embodiment;
**Figure 5** is a block diagram of a fixed portion of a wing of an aircraft with a wing fold system in accordance with an illustrative embodiment;
**Figure 6** is an illustration of a top plan view of a wing in a flight position in accordance with an illustrative embodiment;
**Figure 7** is an illustration of a wing in transition from a flight position to a folded position in accordance with an illustrative embodiment;
**Figure 8** is an illustration of a wing in a folded position in accordance with an illustrative embodiment;
**Figure 9** is an illustration of a cutaway top plan view of a wing in a flight position in accordance with an illustrative embodiment
**Figure 10** is an illustration of a cutaway top plan view of a wing in a folded position in accordance with an illustrative embodiment;
**Figure 11** is an illustration of a cross section side view of selected components of a wing fold system within a wing in a flight position in accordance with an illustrative embodiment;
**Figure 12** is an illustration of a perspective view looking forward and up at a wing fold system in accordance with an illustrative embodiment;
**Figures 13A** - **13C** are diagrams of operations for a method of a wing fold system in accordance with an illustrative embodiment; **Figure 13A** shows operations **1302** to **1328** of the method; **Figure 13B** shows operations **1330** to **1356** of the method; **Figure 13C** shows operations **1358** to **1378** of the method;
**Figures 14A** - **14C** are illustrations of a method of folding a wing of an aircraft in accordance with an illustrative embodiment; **Figure 14A** shows operations **1402** to **1416** of the method; **Figure 14B** shows operations **1418** to **1436** of the method; **Figure 14C** shows operations **1438** to **1450** of the method;
**Figure 15** is an illustration of an aircraft manufacturing and service method in accordance with an illustrative embodiment; and
**Figure 16** is an illustration of an aircraft in which an illustrative embodiment may be implemented.

### DETAILED DESCRIPTION

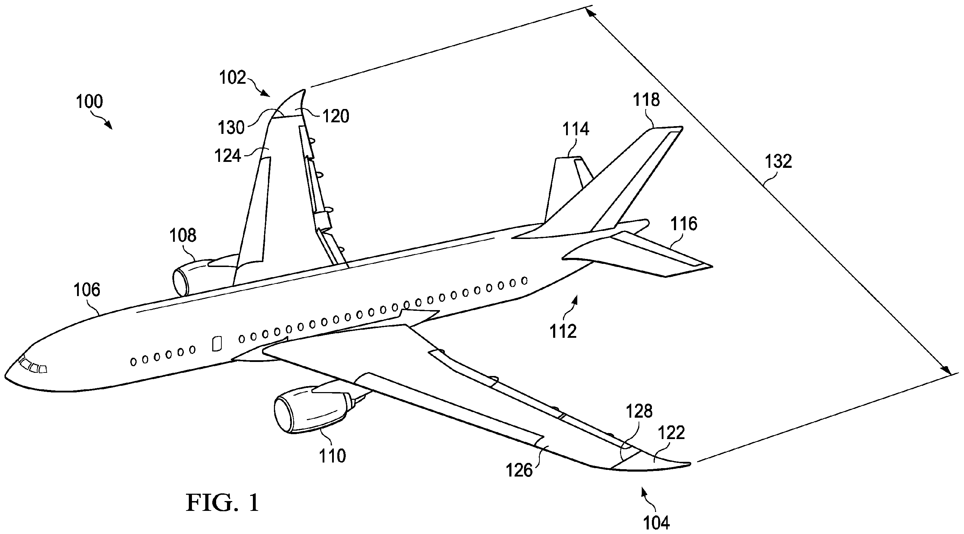

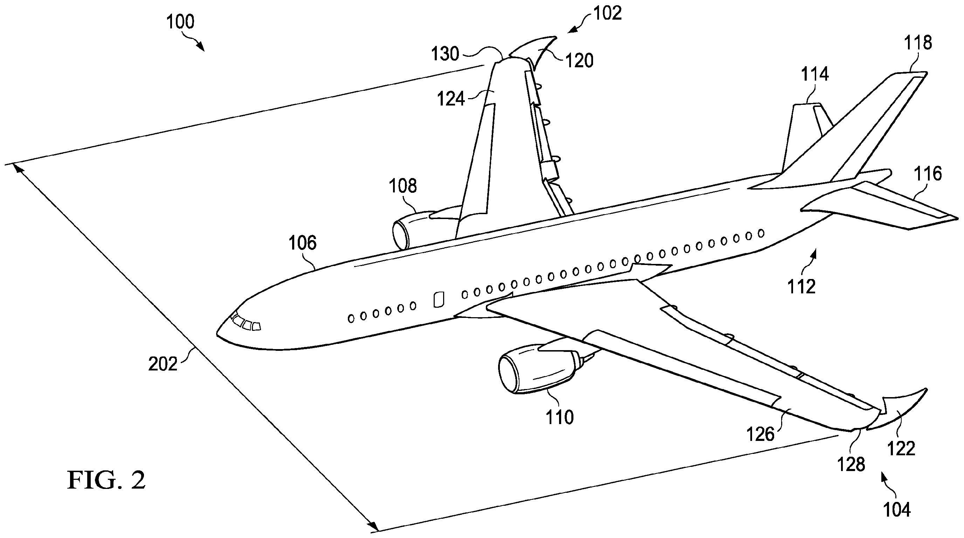

Unless otherwise noted and where appropriate, similarly named features and elements of an embodiment of one figure of the disclosure correspond to and embody similarly named features and elements of embodiments of the other figures of the disclosure. With reference now to the figures, and in particular, with reference to **Figures 1** and **2**, are diagrams of an aircraft embodying a wing fold controller of a wing fold system in accordance with an illustrative embodiment. In this illustrative example, aircraft **100** may include wing **102** and wing **104** attached to body **106**; engine **108** attached to wing **102**; engine **110** attached to wing **104**. **Figure 1** depicts wings **102** and **104** of aircraft **100** in a flight position with flight wingspan **132** and **Figure 2** depicts wings **102** and **104** of aircraft **100** in a folded position with folded wingspan **202**.

Wing **102** may include fixed portion **124** and unfixed portion **120**. Fixed portion **124** may be an inboard portion of wing **102**, which may be fixed to body **106**. Similarly, wing **104** includes fixed portion **126** and unfixed portion **122.** Wing **102** includes wing fold system **130** to move unfixed portion **120** with respect to fixed portion **124**. Wing **104** may include wing fold system **128**, which may move unfixed portion **122** with respect to fixed portion **126**.

Body **106** may have tail section **112**. Horizontal stabilizer **114**, horizontal stabilizer **116**, and vertical stabilizer **118** may be attached to tail section **112** of body **106**.

Aircraft **100** is an example of an aircraft in which a wing fold system may be implemented in accordance with an illustrative embodiment. Wing fold system **128** and wing fold system **130** each may include a latch assembly in accordance with an illustrative embodiment.

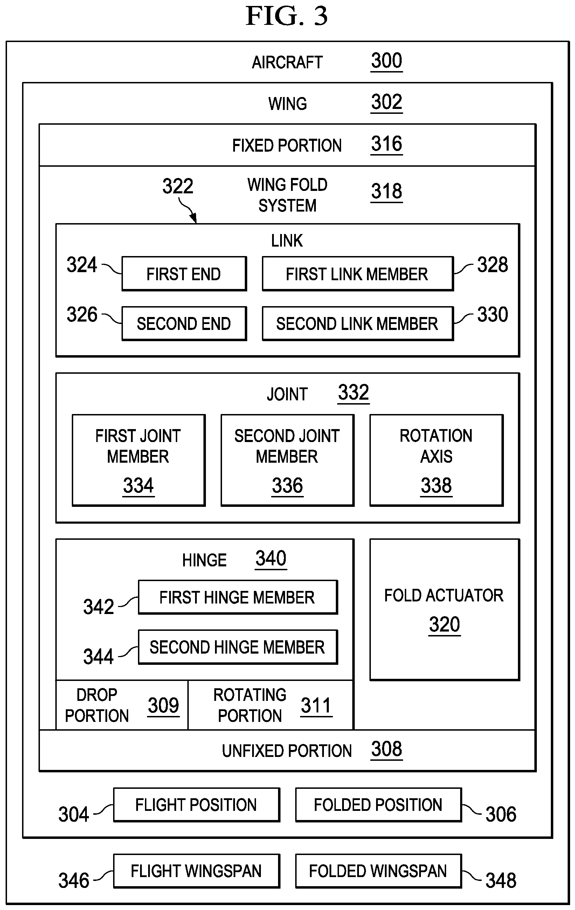

With reference to **Figure 3, Figure 3** is a block diagram of a wing of an aircraft with a wing fold system in accordance with an illustrative embodiment. Aircraft **300** may be an illustrative embodiment of aircraft **100** in **Figure 1** and **Figure 2**. Wing **302** may be an illustrative embodiment of wing **102** and of wing **104** of aircraft **100** of **Figures 1** and **2**.

Wing **302** may include: flight position **304**, folded position **306**, unfixed portion **308**, drop portion **309**, rotating portion **311**, fixed portion **316**, wing fold system **318**, fold actuator **320**, link **322**, and joint **332**. The folding of wing **302** may allow flight wingspan **346** to be reduced when the aircraft is on the ground to become folded wingspan **348**. In this illustrative example, flight wingspan **346** and folded wingspan **348** may be examples of one implementation of flight wingspan **132** in **Figure 1** and folded wingspan **202** in **Figure 2****.**

Flight position **304** may be a state of wing **302**. When wing **302** is in flight position **304**, the wing may be ready for flight. For example, wing **102** and wing **104** of **Figure 1** are in flight position **304** and may be ready for flight.

Folded position **306** may be a state of wing **302**. When wing **302** of an aircraft is in folded position **306**, the aircraft may not ready for flight, but folded wingspan **348** may be smaller than flight wingspan **346**. A shorter wingspan may allow aircraft **300** to operate on airports, such as but not limited to International Civil Aviation Organization "Code E" airports, that have requirements for wingspans that are less than flight wingspan **346**.

In this illustrative example, unfixed portion **308** may be an example of one implementation of unfixed portion **120** of wing **102** and an embodiment of unfixed portion **122** of wing **104** of **Figures 1** and **2****.** Unfixed portion **308** may rotate with respect to fixed portion **316** of wing **302** between flight position **304** of wing **302** and folded position **306** of wing **302**. Unfixed portion **308** may be moveably connected to fixed portion **316**. Unfixed portion **308** may include several features and components as described below.

Fixed portion **316** may be an embodiment of fixed portion **126** of wing **102** and an embodiment of fixed portion **126** of wing **104** of **Figures 1** and **2**. Fixed portion **316** may connect to unfixed portion **308**. Fixed portion **316** may include several features and components as described below.

Wing fold system **318** may be an embodiment of wing fold system **128** and wing fold system **130** of **Figures 1** and **2**. Wing fold system **318** may move unfixed portion **308** between flight position **304** and folded position **306**.

Link **322** may include: first end **324**, second end **326**, first link member **328**, and second link member **330**. First end **324** of link **322** may connect link **322** to drop portion **309** of unfixed portion **308**. First end **324** may provide a first rigidity and/or a first stiffness to maintain the connection between link **322** and drop portion **309**.

Second end **326** of link **322** may connect link **322** to fixed portion **316**. Second end **326** may provide a second rigidity and/or a second stiffness to maintain the connection between link **322** and fixed portion **316**.

Link **322** may connect to fixed portion **316** and drop portion **309** at an angle such that during rotation of unfixed portion **308** from flight position **304** to folded position **306**, link **322** may exert a force on drop portion **309**, and drop portion **309** may rotate downward about hinge **340**. The force from rotating joint **332** may be a compressive force. Link **322** may be rotatable about an axis between first end **324** and second end **326** to allow the drop portion **309** to move or rotate as unfixed portion **308** transitions between flight position **304** and folded position **306**.

Link **322** may cause rotation of drop portion **309** of unfixed portion **308** downward away from rotating portion **311** during transition of wing **302** from flight position **304** to folded position **306**. Link **322** may cause rotation of drop portion **309** of unfixed portion **308** upward toward rotating portion **311** during transition of wing **302** from folded position **306** to flight position **304**.

First link member **328** of link **322** rotatably may connect second link member **330** to one of: first end **324** and second end **326**. First link member **328** may provide for rotation of first end **324** with respect to second end **326**, which may provide for one or more of: a movement, and a rotation, of drop portion **309** with respect to rotating portion **311**, of unfixed portion **308**, as unfixed portion **308** may move or rotate with respect to fixed portion **316** between flight position **304** and folded position **306**. First link member **328** may include a socket for a ball of second link member **330** that may allow rotational movement without linear movement.

Second link member **330** of link **322** rotatably may connect first link member **328** to the other of first end **324** and second end **326** with respect to first link member **328**. Second link member **330** may provide for rotation of first end **324** with respect to second end **326**, which may provide for one of more of movement and rotation of drop portion **309** with respect to rotating portion **311**, of unfixed portion **308**, as unfixed portion **308** may move or rotate with respect to fixed portion **316** between flight position **304** and folded position **306**. Second link member **330** may include a ball for a socket of first link member **328** that may allow rotational movement without linear movement.

Joint **332** of wing fold system **318** may allow rotation of unfixed portion **308** of wing **302** with respect to fixed portion **316** of wing **302** about rotation axis **338**. Joint **332** may include first joint member **334**, second joint member **336**, and rotation axis **338**.

First joint member **334** may be a first member of joint **332**. First joint member **334** may connect a second member of unfixed portion **308** to second joint member **336** of fixed portion **316**. First joint member **334** may allow for rotation of unfixed portion **308** about rotation axis **338**, which may be located at a center point of joint **332**.

Second joint member **336** may be a second member of joint **332**. Second joint member **336** may allow for unfixed portion **308** rotation about rotation axis **338** of joint **332**. Second joint member **336** may connect a fourth member of fixed portion **316** to first joint member **334** of unfixed portion **308**.

Rotation axis **338** of joint **332** may be one or more of a substantially vertical axis, an axis substantially parallel to a yaw axis of an aircraft to which wing **302** may be attached, and an axis perpendicular to wing **302** to allow for a horizontal folding motion of unfixed portion **308** with respect to fixed portion **316**. A horizontal folding motion of unfixed portion **308** about rotation axis **338** may not require lifting the unfixed portion upward against an earth gravity force. A horizontal folding motion of unfixed portion **308** about rotation axis **338** may not require as much force as lifting unfixed portion **308** upward in a vertical folding motion. The lower force required for the horizontal folding motion may allow a less powerful, lighter, and/or more durable fold actuator **320** than may be required by currently used wing fold machinery that lifts a wingtip upward vertically, against earth's gravity.

Hinge **340** may include first hinge member **342** and second hinge member **344**. Hinge **340** may connect drop portion **309** to rotating portion **311** of unfixed portion **308**. Hinge **340** may allow for rotation of drop portion **309** of unfixed portion **308** of wing **302** about a substantially horizontal axis with respect to rotating portion **311** of unfixed portion **308** of wing **302**.

First hinge member **342** may be a first member of hinge **340** and may be attached to rotating portion **311**. Second hinge member **344** may be a second member of hinge **340** and may be attached to drop portion **309** of unfixed portion **308**.

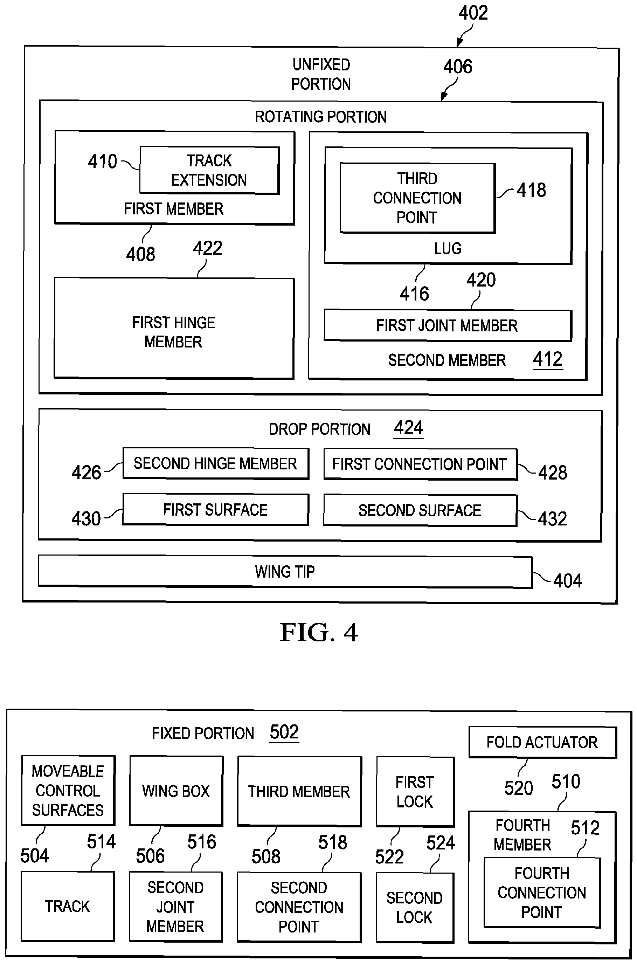

With reference to **Figure 4, Figure 4** is a block diagram of the unfixed portion of a wing of an aircraft with a wing fold system in accordance with an illustrative embodiment. Unfixed portion **402** may be an illustrative embodiment of unfixed portion **120**, **122**, or **308** in **Figure 1** and **Figure 2**, or **Figure 3**. The wing may be an illustrative embodiment of wings **102**, **104**, and **302** of **Figures 1**, **2**, and **3**. The aircraft may be an illustrative embodiment of aircraft **100** of **Figures 1** and **2**. The wing fold system may be an illustrative embodiment of wing fold system **318** of **Figure 3**.

Unfixed portion **402** may include wingtip **404**, rotating portion **406**, and drop portion **424**. Unfixed portion **402** may be moveably connected to fixed portion **316 of** **Figure 3**. Fixed portion **316** may be an illustrative embodiment of fixed portion **124**, **126**, or **316** of **Figures 1**, **2**, and **3**.

Unfixed portion **402** may transition between flight position **304** and folded position **306** of **Figure 3**, which may allow wingspan **132** (see **Figure 1**) to become wingspan **202** (see **Figure 2**).

Wingtip **404** may be a tip of wing **302** of **Figure 3**. Wingtip **404** may be an outer section of unfixed portion **402**. Wingtip **404** and/or unfixed portion **402** may be without moveable control surfaces. Wingtip **404** and/or unfixed portion **402** may be without leading edge devices. Wingtip **404** and/or unfixed portion **402** may be without fuel storage. Wingtip **404** and/or unfixed portion **402** may extend wingspan **132** for aircraft **100** of **Figure 1**. Wingtip **404** and/or unfixed portion **402** may reduce drag, increase lift, and increase efficiency of aircraft **100**. Wingtip **404** and/or unfixed portion **402** may be raked.

Rotating portion **406** may be a portion of unfixed portion **402** of wing **302** of **Figure 3** that may rotate relative to fixed portion **316**. Rotating portion **406** may include first member **408**, second member **412**, and first hinge member **422**. Rotating portion **406** of unfixed portion **402** may rotate between flight position **304** and folded position **306**.

First member **408** may support unfixed portion **402** in and between flight position **304** and folded position **306**. First member **408** may connect unfixed portion **402** to fixed portion **316** of wing **302** of **Figure 3**. First member **408** may slide into third member **508** of **Figure 5** of fixed portion **316**. In flight position **304**, a section of first member **408** may nest within a third member of fixed portion **316** such that primary flight loads may be transferred from unfixed portion **402** to a main wing box in fixed portion **316**. First member **408** nesting within a third member of fixed portion **316** may provide a continuous path across the wing fold joint that may support wing loading. This nesting connection may eliminate a need for additional internal wing strengthening elements and/or external features such as hinge lugs or pins or blister fairings, such as may be required on current wing fold designs. Eliminating the need for additional internal wing strengthening elements and/or external features may allow for a thinner wing box depth, less drag, and less weight than for current and/or alternative wing fold designs. Allowing a thinner wing box depth, less drag, and less weight than current wing fold designs may provide superior wing efficiency and aircraft fuel economy over current and/or alternative wing fold designs.

First member **408** may include track extension **410**. First member **408** may serve as an extension of a wing spar for rotating portion **406** such that primary flight loads may be carried from rotating portion **406** to a main wing box in fixed portion **316**.

Track extension **410** may fit into track **514** of **Figure 5** of fixed portion **316** of wing **302**. Track extension **410** may support and may align unfixed portion **402** in and between folded position **306** and flight position **304**.

Second member **412** may support unfixed portion **402** in and between flight position **304** and folded position **306**. Second member **412** may include an extension and first joint member **420**. The extension of second member **412** may be lug **416**. Second member **412** may connect unfixed portion **402** to a fourth member in fixed portion **316** of wing **302**. Second member **412** may slide into a fourth member of fixed portion **316**. In flight position **304**, a section of second member **412** may nest within a fourth member of fixed portion **316**. Second member **412** may serve rotating portion **406** as an extension of a wing spar, such that primary flight loads may be carried from rotating portion **406** to a main wing box in fixed portion **316**.

Second member **412** nesting within a fourth member of fixed portion **316** may provide a continuous path across the wing fold joint that may support wing loading. This nesting connection may eliminate a need for additional internal wing strengthening elements and/or external features such as hinge lugs or pins or blister fairings, such as may be required on current wing fold designs.

Eliminating the need for additional internal wing strengthening elements and/or external features may allow for a thinner wing box depth, less drag, and less weight than for current and/or alternative wing fold designs. Thinner wing box depth, less drag, and less weight than current wing fold designs may provide superior wing efficiency and aircraft fuel economy over current and/or alternative wing fold designs.

Lug **416** may be an extension of second member **412**. Lug **416** may include third connection point **418**.

**[0001]** Third connection point **418** may be a portion of lug **416**. Third connection point **418** may be a fold actuator connection point that may connect lug **416**, second member **412**, and rotating portion **406** to fold actuator **320** of wing fold system **318**. Third connection point **418** may provide a stiffness that allows rotating portion **406** to move in response to actuation of fold actuator **320**.

In this illustrative example first joint member **420** may be an example of one embodiment of first joint member **334** in joint **332** and wing fold system **318** of **Figure 3****.** First joint member **420** may allow for rotation about rotation axis **338** of joint **332**. First joint member **420** may connect to second joint member **516**. Second joint member **516** may be attached to fixed portion **316** of wing **302**. In this illustrative example second joint member **516** may be an example of one embodiment of second joint member **336** in joint **332** and wing fold system **318** of **Figure 3**.

In this illustrative example, first hinge member **422** may be an example of one embodiment of first hinge member **342** of hinge **340** and wing fold system **318** of **Figure 3**. First hinge member **422** may allow movement of drop portion **424** with respect to rotating portion **406**.

Drop portion **424** may include second hinge member **426**, first connection point **428**, first surface **430**, and second surface **432**. Drop portion **424** may be a portion of unfixed portion **402** of wing **302**. Drop portion **424** may move and provide space for rotating portion **406** to fold next to fixed portion **316** by moving out of a path of travel of rotating portion **406**.

In this illustrative example, second hinge member **426** may be an example of one embodiment of second hinge member **344** of hinge **340** of wing fold system **318** of **Figure 3**. Second hinge member **426** may allow movement of drop portion **424** with respect to rotating portion **406**.

In this illustrative example, first connection point **428** may be an example of one embodiment of first end **324** and link **322** of **Figure 3**. First connection point **428** may provide stiffness and/or rigidity that may cause drop portion **424** to move responsive to movement of rotating portion **406**.

First surface **430** may be a first surface of drop portion **424** of wing **302** that may form a portion of a top surface of wing **302**. First surface **430** may provide an aerodynamic surface for wing **302**. First surface **430** may be smaller than second surface **432**

Second surface **432** may be a second surface of drop portion **424** of wing **302** that may form a portion of a bottom surface of wing **302**. Second surface **432** may provide an aerodynamic surface for wing **302**. In this illustrative example, second surface **432** may be connected to first end **324** of link **322** of wing fold system **318** of **Figure 3**. Second surface **432** may be larger than first surface **430**. Second surface **432** being larger than first surface **430** may provide a space for first connection point **428** on second surface **432** that may allow for link **322** to connect to drop portion **424**.

With reference to **Figure 5**, **Figure 5** is a block diagram of a fixed portion of a wing of an aircraft with a wing fold system in accordance with an illustrative embodiment. The wing may be an illustrative embodiment of wings **102**, **104**, and **302** of **Figures 1**, **2**, and **3**. The aircraft may be an illustrative embodiment of aircraft **100** of **Figures 1** and **2****.** The wing fold system may be an illustrative embodiment of wing fold system **318** of **Figure 3**.

Fixed portion **502** may be connected to unfixed portion **402** of wing **302**. Fixed portion **502** may include moveable control surfaces **504**, wing box **506**, third member **508**, fourth member **510**, track **514**, second joint member **516**, second connection point **518**, fold actuator **520**, first lock **522**, and second lock **524**.

Moveable control surfaces **504** may be surfaces of a wing of an aircraft that move to control the aircraft trajectory during flight of the aircraft. Moveable control surfaces **504** may control an aerodynamic shape of the wing to provide control of the aircraft. Moveable control surfaces **504** may include a flap, a slat, and/or an aileron.

Wing box **506** may be a structure that supports wing **302**. Wing box **506** may connect between wing **302** of aircraft **100** and body **106** of aircraft **100**.

Third member **508** may be a structure that may be a part of a leading edge of wing box **506**. Third member **508** may support first member **408** of unfixed portion **402** when wing **302** may be in flight position **304**. First member **408** may slide in to and out of third member **508** as wing **302** transitions between flight position **304** and folded position **306**. Third member **508** may be formed to envelope three sides of first member **408** when wing **302** is in flight position **304**.

Fourth member **510** may be a structure that may be a part of a trailing edge of wing box **506**. Fourth member **510** may include fourth connection point **512**. Fourth member **510** may support second member **412** of rotating portion **406** of unfixed portion **402** when wing **302** may be in flight position **304**. Fourth member **510** may be formed to envelope three sides of second member **412** when wing **302** is in flight position.

Fourth connection point **512** may be a point of connection of fourth member **510** to fold actuator **320** of wing fold system **318**. Fourth connection point **512** may be a fold actuator connection point that may connect fold actuator **320** to fixed portion **316**.

Track **514** may be a curved member of fixed portion **502**. Track **514** may support first member **408** of unfixed portion **402** in flight position **304**, folded position **306**, and transitions between flight position **304** and folded position **306**. Track **514** may guide first member **408** of unfixed portion **402** through transitions between flight position **304** and folded position **306**.

In this illustrative example, second joint member **516** may be one embodiment of second joint member **336** of joint **332** of wing fold system **318** of **Figure 3**. Second joint member **516** may allow for rotation about rotation axis **338** of joint **332**. Second joint member **516** may connect first joint member **420** of rotating portion **406** of unfixed portion **402** to fixed portion **316**.

In this illustrative example, second connection point **518** may be one embodiment of a point of connection for link **322** of wing fold system **318** of **Figure 3**. Second connection point **518** may connect to second end **326** of link **322**. Second connection point **518** may provide stiffness and/or rigidity that may cause a drop portion to move responsive to movement of rotating portion **406** of unfixed portion **402** of wing **302**.

First lock **522** and second lock **524** may be located in fixed portion **502**. Each lock may have a respective latch pin that may extend through an opening in first member **408** and third member **508**. Each lock may retain first member **408** into a nested position within third member **508** when the wing **302** is in flight position **304**. Each lock individually may prevent unfixed portion **402** from moving out of flight position **304**.

The block diagram illustrations of **Figures 3-5** are not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment. Alternative examples may have alterations to those described and still be within the scope of one or more illustrative embodiments.

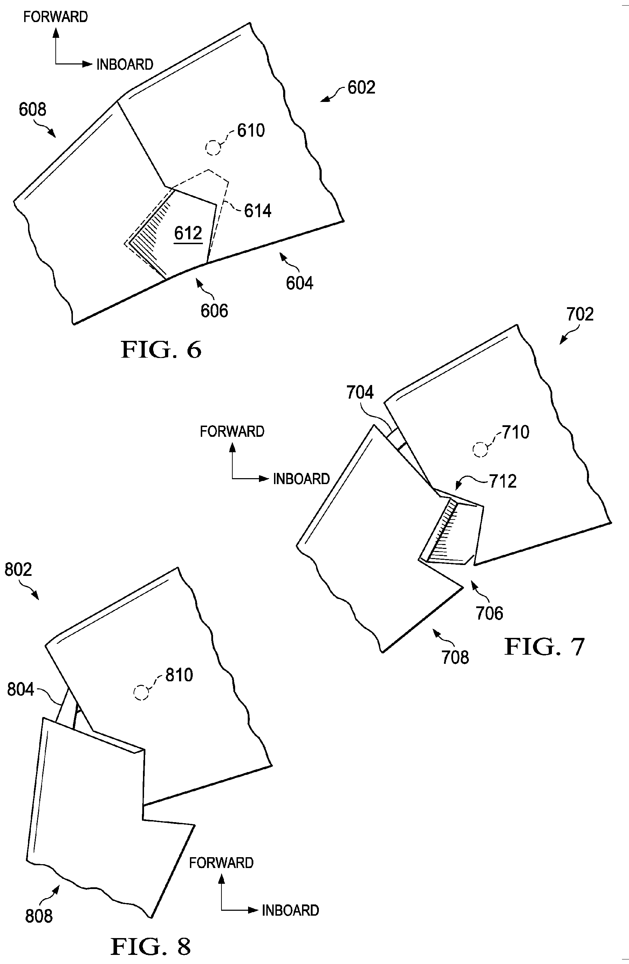

With reference to **Figure 6**, **Figure 7**, and **Figure 8**, a series of top plan view illustrations of a wing is depicted in accordance with an illustrative embodiment. **Figure 6** is an illustration of a wing in a flight position in accordance with an illustrative embodiment; **Figure 7** is an illustration of a wing in transition from a flight position to a folded position in accordance with an illustrative embodiment; and **Figure 8** is an illustration of a wing in a folded position in accordance with an illustrative embodiment. As above, unless otherwise noted and where appropriate, similarly named features and elements of an embodiment of one figure of the disclosure correspond to and embody similarly named features and elements of embodiments of the other figures of the disclosure.

With reference to **Figure 6**, a top plan view illustration of wing **602** in flight position **304** is depicted in accordance with an illustrative embodiment. Wing **602** may include fixed portion **604**, drop portion **606**, unfixed portion **608**, rotation axis **610** of joint **332**, first surface **612** of drop portion **606**, and second surface **614** of drop portion **606**. Rotating portion **311** of **Figure** 3 may rotate about rotation axis **610**.

First surface **612** may be visible from above wing **602**. Second surface **614**, which may be larger than first surface **612**, may only be visible from below wing **602**, and is therefore shown as a dashed line.

With reference to **Figure 7**, a top plan view illustration of wing **702** in transition from flight position **304** to folded position **306** is depicted in accordance with an illustrative embodiment. Rotating portion **708** may be seen rotated, back toward tail section **112** and in toward body **106** of aircraft **100**, about rotation axis **710**. First member **704** of rotating portion **708** may be visible. Drop portion **706** may be seen rotated downward about hinge **712**, away from rotating portion **708**. Hinge **712** may connect rotating portion **708** and drop portion **706**.

With reference to **Figure 8**, a top plan view illustration of wing **802** in folded position **306** is depicted in accordance with an illustrative embodiment. When wing **802** is in folded position **306**, first member **804** is more visible than in **Figure 7**. Rotating portion **808** may be seen rotated, back toward tail section **112** and in toward body **106** of aircraft **100**, about rotation axis **810**. When wing **802** is in folded position **306**, from a top view, drop portion **706** may be below rotating portion **808** and may no longer visible from above wing **802**.

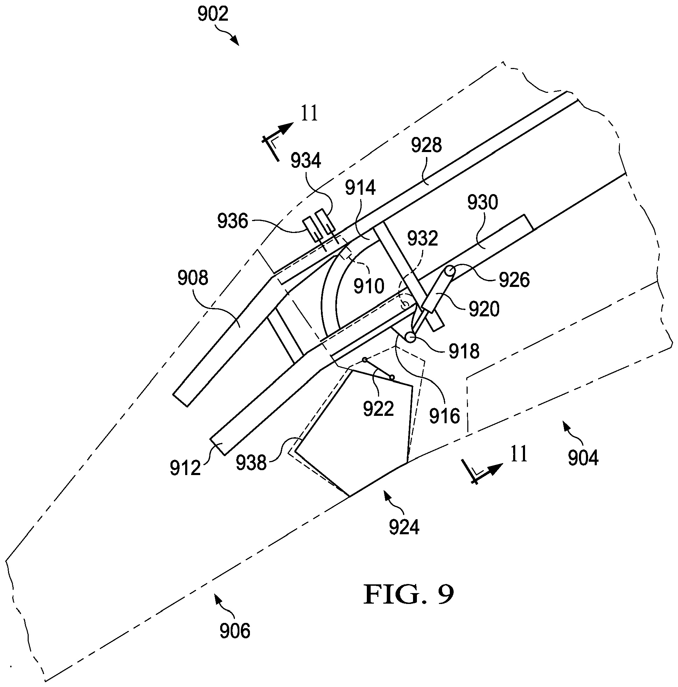

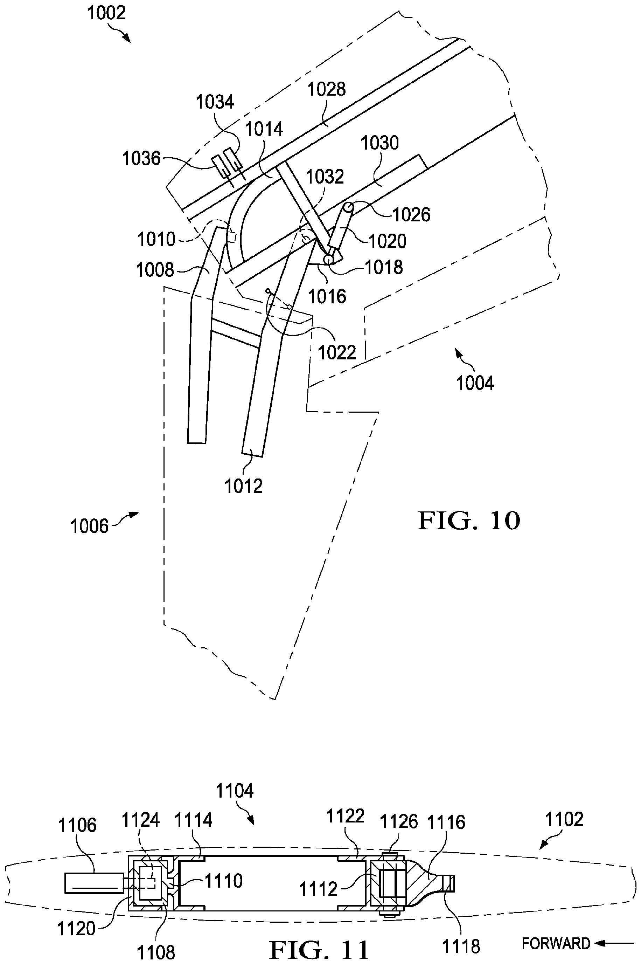

With reference to **Figure 9** **and** **Figure 10**, a cutaway top plan view illustration of a wing with a wing fold system is depicted in accordance with one or more illustrative embodiments. In these illustrative examples, each of the above referenced features of wing **902** may be an embodiment corresponding to similarly named features of **Figures 3**, **4**, and **5**. Features shown in **Figure 9** and **Figure 10** may connect and interact as their similarly named features are described for **Figures 3****,** **4**, and **5**. Wing **902** may be an illustrative embodiment of a top plan cutaway view of wing **102**, wing **104**, and wing **302** of **Figures 1**, **2**, and **3**. The wing fold system may be an illustrative embodiment of wing fold system **318** of **Figure 3**. **Figure 9** depicts wing **902** in flight position **304**. **Figure 10** depicts wing **1002** in folded position **306**. **Figure 11** depicts a side cutaway view of fixed portion **904** of wing **902**, marked as view 11-11 of **Figure 9**.

With reference to **Figure 9**, **Figure 9** is an illustration of a cutaway top plan view of a wing in a flight position in accordance with an illustrative embodiment. More specifically, a top plan view, with a wing skin cutaway, of selected interior components of wing fold system **318** in flight position **304** is depicted in accordance with an illustrative embodiment. Wing **902** may include fixed portion **904**, rotating portion **906**, first member **908** of rotating portion **906**, track extension **910** of first member **908**, second member **912** of rotating portion **906**, track **914**, lug **916** of second member **912**, third connection point **918**, fold actuator **920**, link **922**, drop portion **924**, fourth connection point **926**, third member **928** of fixed portion **904**, fourth member **930** of fixed portion **904**, joint **932**, first lock **934**, second lock **936**, and hinge **938**.

As depicted in **Figure 9**, track extension **910** of first member **908** may be seen nested within third member **928**. Additionally, a section of second member **912** may be seen nested within fourth member **930**.

With reference to **Figure 10**, **Figure 10** is an illustration of a cutaway top plan view of a wing in a folded position in accordance with an illustrative embodiment. More specifically, a top plan view, with wing skin cutaway, of selected interior components of wing fold system **318** in folded position **306** is depicted in accordance with an illustrative embodiment. Wing **1002** may include fixed portion **1004**, rotating portion **1006**, first member **1008** of rotating portion **1006**, track extension **1010** of first member **1008**, second member **1012** of rotating portion **1006**, track **1014**, lug **1016** of second member **1012**, third connection point **1018**, fold actuator **1020**, link **1022**, fourth connection point **1026**, third member **1028** of fixed portion **1004**, fourth member **1030** of fixed portion **1004**, joint **1032**, first lock **1034**, and second lock **1036**. In this view, drop portion **924** is not visible because it may be extended vertically down beneath rotating portion **1006**. Fold actuator **1020** is shown in a retracted position after pulling lug **1016** in a counter clockwise arc from a position shown for lug **1016** in **Figure 9**.

In folded position **306**, first member **1008** may be disengaged from third member **1028**. A majority of second member **1012** may be seen disengaged from fourth member **930**. Track extension **1010** of first member **1008** may be engaged in track **1014**. Second member **912** and rotating portion **906** may be seen as having rotated about rotation axis **338** which may be located at a center point of joint **1032**.

With reference to **Figure 11**, **Figure 11** is an illustration of a cross section side view of selected components of a wing fold system within a wing in a flight position in accordance with an illustrative embodiment. **Figure 11** depicts a cutaway view of wing **1102** from a side, marked as view 11-11 on wing **902** in **Figure 9****.** In this illustrative example, wing **1102** may an embodiment of wing **104** or wing **302**, on aircraft **100** of **Figures 1**, **2**, or **3**.

Wing **1102** may include a wing fold system **1104**. Selected components of wing fold system **1104** may include: first lock **1106**, first member **1108**, track extension **1110** of first member **1108**, second member **1112**, track **1114**, lug **1116** of second member **1112**, third connection point **1118** to lug **1116** on second member **1112**, third member **1120**, fourth member **1122**, latch pin **1124**, and joint **1126**.

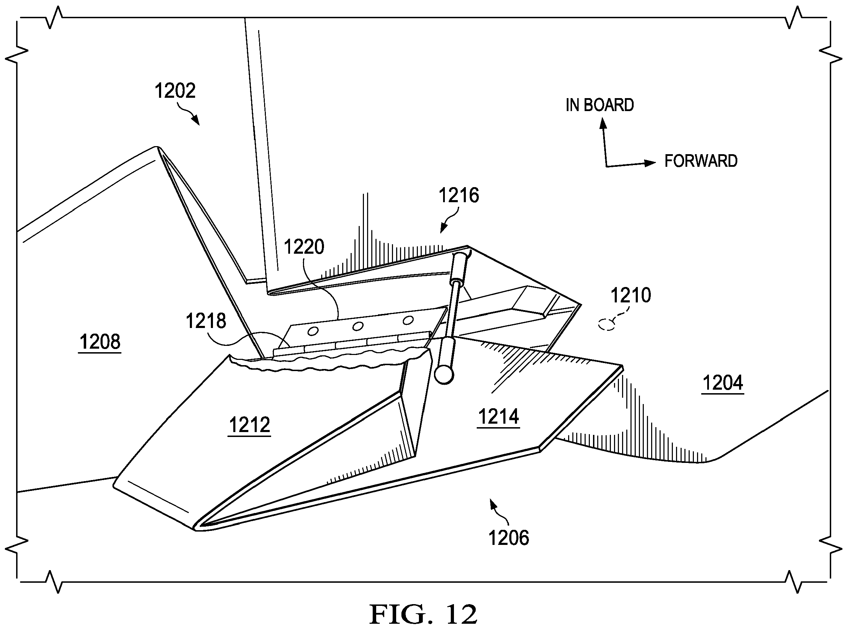

With reference to **Figure 12**, **Figure 12** is an illustration of a perspective view looking forward and up at a wing fold system in accordance with an illustrative embodiment. More specifically, wing fold system **1202** is depicted with drop portion **1212** pushed downward by link **1216** as rotating portion **1208** has moved aft toward folded position **306** from flight position **304**.

Link is shown connected to interior side **1214** of second surface **1206.** Drop portion **1212** is seen rotated downward and away from rotating portion **1208** about hinge **1218**. First hinge member **1220** is visible with drop portion **1212** extended downward as shown.

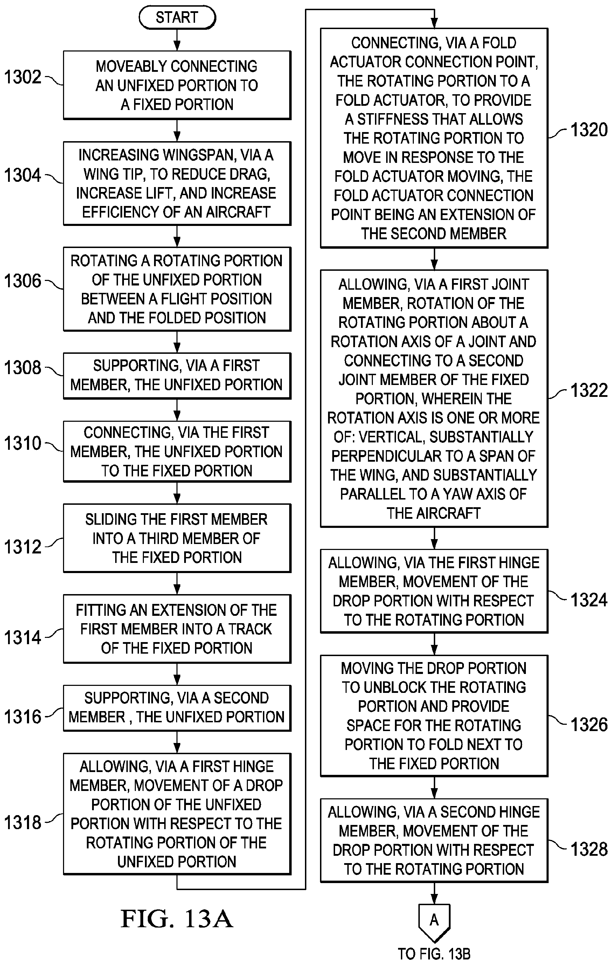

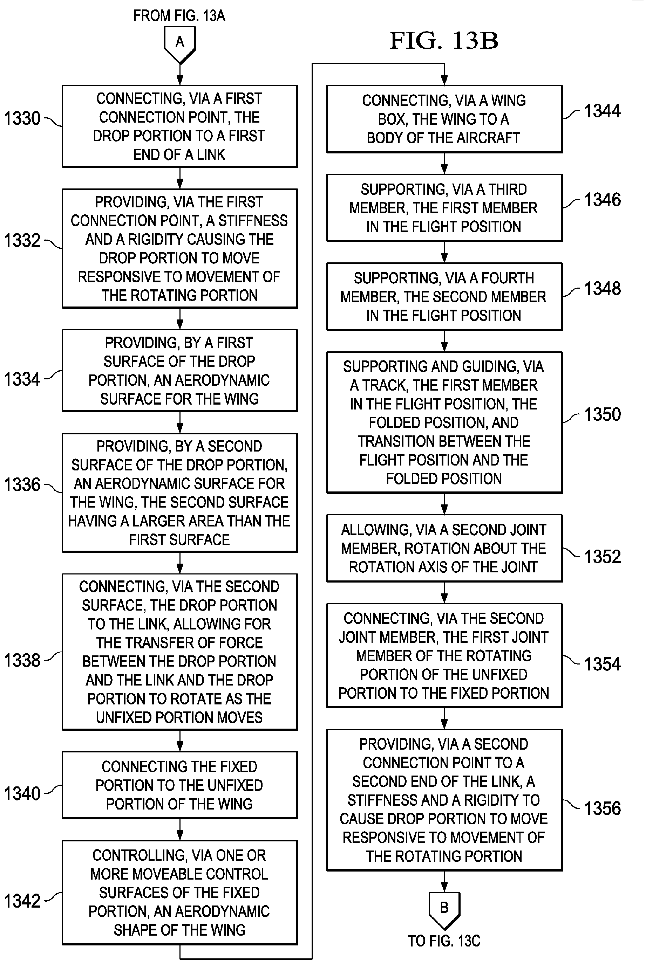

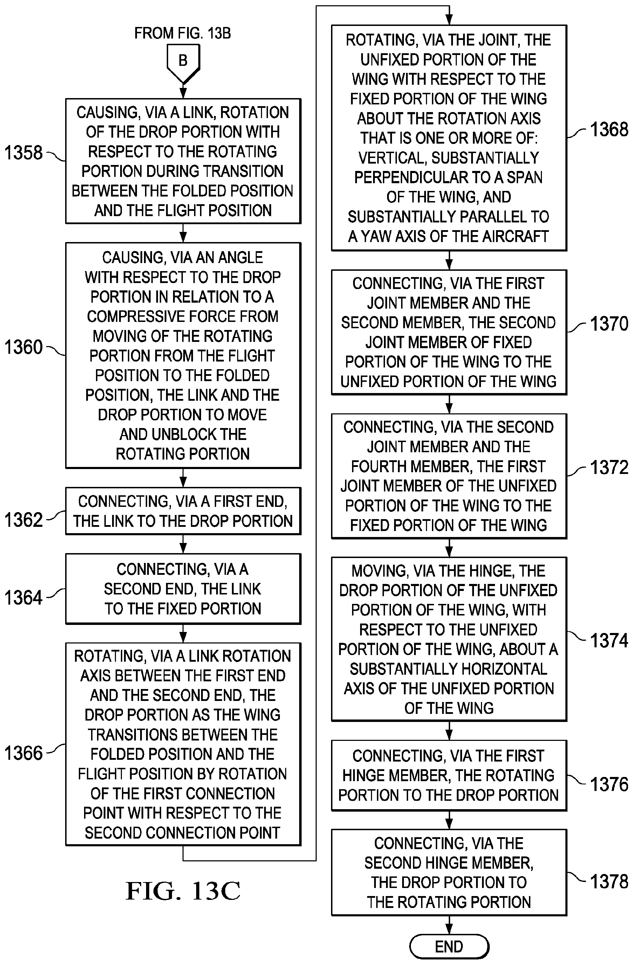

With reference to **Figures 13A** - **13C**, **Figure 13A** - **13C** are diagrams of operations for a method of a wing fold system in accordance with an illustrative embodiment; **Figure 13A** shows operations **1302** to **1328** of the method; **Figure 13B** shows operations **1330** to **1356** of the method; **Figure 13C** shows operations **1358** to **1378** of the method. The various features and elements of the embodiment of **Figures 13A**, **13B**, and **13C** that are used to describe method **1300** may correspond to similarly named features and elements of embodiments depicted in the other figures of this application.

Method **1300** may include operations listed below. Method **1300** may start with operation **1302** and end after operation **1378**. Operations listed for method **1300** may be performed in an order other than that presented. Some operations may be performed simultaneously. Some operations may be omitted. Operations other than those listed may be added. Performance of some operations, or ordering of operations, may be dependent upon a beginning state of the wing, such as a flight position or a folded position, or being in transition between states.

In operation **1302**, an unfixed portion of the wing with the wing fold system may be moveably connected to a fixed portion of the wing with the wing fold system. In being moveably connected, the unfixed portion may rotate or otherwise move with respect to the fixed portion.

In operation **1304**, a wingtip may increase a wingspan. Increasing wingspan may reduce drag, increase lift, and increase efficiency of an aircraft. Increase of the wingspan may be by movement of the unfixed portion comprising the wingtip with regards to the fixed portion of one or more wings.

In operation **1306**, a rotating portion of the unfixed portion may rotate between a flight position and a folded position. The rotation may be actuated by a fold actuator of the wing fold system. The fold actuator may be connected to one or more of the unfixed portion and the fixed portion.

In operation **1308**, a first member of the unfixed portion may support the unfixed portion. Support may be provided by a rigidity and/or a stiffness of the first member.

In operation **1310**, the first member of the unfixed portion may connect the unfixed portion to the fixed portion. The connection may be provided through the use of one or more joints and/or members included within the wing.

In operation **1312**, the first member of the unfixed portion may slide into a third member of the fixed portion. The sliding may be aided by additional structures or materials. Additional structures or materials may include bearings and lubrication.

In operation **1314**, an extension of the first member of the unfixed portion may fit into a track of the fixed portion. Fitment of the first member into the track may facilitate sliding of the first member with respect to the track.

In operation **1316**, a second member of the unfixed portion may support the unfixed portion. Support may be provided by a rigidity and/or a stiffness of the second member.

In operation **1318**, a first hinge member may allow movement of a drop portion of the unfixed portion with respect to a rotating portion of the unfixed portion. The first hinge member may be connected to the unfixed portion. The movement may be a rotation downward of the drop portion with respect to the rotating portion to facilitate a transition of the wing between the flight position and the folded position. The movement may occur simultaneous to the rotation of the rotating portion.

In operation **1320**, a fold actuator connection point may connect the rotating portion of the unfixed portion of a wing to a fold actuator. The connection may provide a stiffness that allows the rotating portion to move in response to the fold actuator moving. The fold actuator connection point may be an extension of the second member. The extension of the second member may be a lug.

In operation **1322**, a first joint member of a joint of the wing fold system may allow for rotation of the rotating portion of the unfixed portion of the wing about a rotation axis of the joint. The first joint member may connect to a second joint member of the fixed portion. The rotation axis may be one or more of: vertical, substantially perpendicular to a span of the wing, and substantially parallel to a yaw axis of the aircraft.

In operation **1324**, the first hinge member may allow movement of the drop portion of the unfixed portion of the wing with respect to the rotating portion of the unfixed portion. The movement allowed by the first hinge member may be a rotational movement of the drop portion. The first hinge member may be connected to the rotating portion.

In operation **1326**, the drop portion may move to unblock the rotating portion and provide space for the rotating portion to fold next to the fixed portion of the wing. Movement of the drop portion may be a clockwise rotation or a counterclockwise rotation to move the drop portion above or below the fixed portion.

In operation **1328**, a second hinge member may allow for movement of the drop portion of the unfixed portion with respect to the rotating portion of the wing. The movement allowed by the second hinge member may be a rotational movement of the drop portion. The second hinge member may be connected to the drop portion.

In operation **1330**, a first connection point may connect the drop portion of the unfixed portion to a first end of a link of the wing fold system. The connection may allow for the transfer of movement forces between the drop portion and the link.

In operation **1332**, the first connection point may provide a stiffness and/or a rigidity, which may cause the drop portion to move responsive to movement of the rotating portion of the unfixed portion. The stiffness and/or the rigidity may be provided through the use of materials such as metals, alloys, or composites, including steel, aluminum, carbon fiber, other materials of like stiffness and/or rigidity, and any combination thereof.

In operation **1334**, a first surface of a drop portion of the unfixed portion of a wing may provide an aerodynamic surface for the wing. The first surface may be a top surface of the drop portion.

In operation **1336**, a second surface of the drop portion may provide an aerodynamic surface for the wing. The second surface may be a bottom surface of the drop portion. The second surface may have a larger area than the first surface.

In operation **1338**, the second surface of a drop portion may connect the drop portion to the link. Connecting the second surface of the drop portion to the link may allow for the transfer of force between the drop portion and the link. The drop portion may rotate as the unfixed portion moves. The drop portion may rotate about the hinge.

In operation **1340**, the fixed portion of a wing may be connected to the unfixed portion of the wing. Connecting the fixed portion to the unfixed portion may allow for changing an overall wingspan of an aircraft via movement of the unfixed portion.

In operation **1342**, one or more moveable control surfaces of the fixed portion of the wing may control an aerodynamic shape of the wing. Controlling the aerodynamic shape of the wing may allow for control of an aircraft during flight. All moveable control surfaces may be located on the fixed portion of the wing.

In operation **1344**, a wing box may connect the wing to a body of the aircraft. Connecting the wing to the body may allow for the wing to provide lift to the aircraft during flight.

In operation **1346**, a third member of the fixed portion may support the first member of the unfixed portion in the flight position. The third member may support the first member and may secure the unfixed portion to the fixed portion in the flight position.

In operation **1348**, a fourth member of the fixed portion may support the second member in the flight position. The fourth member may support the second member and may secure the unfixed portion to the fixed portion in the flight position.

In operation **1350**, the track of the unfixed portion of the wing may support the first member of the unfixed portion in the flight position, the folded position, and transition between the flight position and the folded position. The track of the unfixed portion of the wing may guide the first member of the unfixed portion in transition between the flight position and the folded position. The track may include one or more extensions juxtaposed with one or more extensions of the first member to provide for the support and guidance.

In operation **1352**, the second joint member of the fixed portion may allow rotation of the unfixed portion about the rotation axis of the joint of the wing fold system. Allowing the rotation may provide for changing an overall wingspan by rotation of the unfixed portion.

In operation **1354**, the second joint member of the unfixed portion may connect the first joint member of the rotating portion of to the fixed portion. Connecting the first joint member to the second joint member may allow for alignment of the unfixed portion to the fixed portion.

In operation **1356**, a second connection point to a second end of the link may provide a stiffness and/or a rigidity. The stiffness and/or the rigidity may cause the drop portion of the unfixed portion to move responsive to movement of the rotating portion via force transferred through the link.

In operation **1358**, the link may cause rotation of the drop portion with respect to the rotating portion during transition between the folded position and the flight position. The link may terminate contact of the drop portion with the fixed portion, and may cause the rotation to move the drop portion downward and out of the way of the unfixed portion, as the wingtip may move closer to the fixed portion as the wing transitions from the flight position to the folded position. The link may cause the rotation to move the drop portion upward and in contact with the fixed portion, as the wingtip may move away from the fixed portion as the wing transitions from the folded position to the flight position.

In operation **1360**, an angle, with respect to the drop portion in relation to a compressive force from moving of the rotating portion of the unfixed portion from the flight position to the folded position, may cause the drop portion to move and unblock the rotating portion. The causing of the drop portion to move and unblock the rotating portion may provide enough space for the unfixed portion to fold next to the fixed portion and reduce the overall wingspan.

In operation **1362**, a first end of the link may connect the link to the drop portion. Connecting the link to the drop portion may allow for the transfer of force between the link and the drop portion as the unfixed portion moves with respect to a fixed portion of the wing. The first end of the link may connect to an interior side of the second surface of the drop portion.

In operation **1364**, a second end of the link may connect the link to the fixed portion of the wing. Connecting the link to the fixed portion may allow for the transfer of force between the link and the fixed portion as the unfixed portion of the wing moves with respect to the fixed portion.

In operation **1366**, a link rotation axis between the first end of the link and the second end of the link may rotate the drop portion as the wing transitions between the folded position and the flight position by rotation of a first connection point between the link and the drop portion with respect to second connection point between the link and the fixed portion. Rotation about the link rotation axis may allow for the drop portion to be connected to the rotating portion and the link while forces transferred via the link may cause the drop portion to move out of the way of the rotating portion as the unfixed portion may fold next to the fixed portion.

In operation **1368**, the joint of the wing fold system may allow rotation of the unfixed portion of the wing with respect to the fixed portion of the wing about the rotation axis that may be one or more of: vertical, substantially perpendicular to a span of the wing, and substantially parallel to a yaw axis of the aircraft. Orientation of the rotation axis may allow for a horizontal rotation of the unfixed portion with respect to the fixed portion that requires less force as compared to a vertical rotation of the unfixed portion with respect to the fixed portion. A lower force requirement may allow for a wing folding system with smaller and/or lighter components than those used by current wing fold systems.

In operation **1370**, the first joint member of the joint and the second member of the rotating portion of the unfixed portion may connect the second joint member of the fixed portion to the unfixed portion. The first joint member connecting the second joint member to the unfixed portion may allow for movement of the unfixed portion about the joint.

In operation **1372**, the second joint member of the joint of the wing fold system of the wing and the fourth member of the fixed portion of the wing may connect the first joint member of the unfixed portion of the wing to the fixed portion of the wing. The second joint member connecting the first joint member to the fixed portion may allow for movement of the unfixed portion about the joint.

In operation **1374**, the hinge of the wing fold system may move the drop portion of the unfixed portion of the wing, with respect to the unfixed portion of the wing, about a substantially horizontal axis of the unfixed portion. Moving the drop portion may provide a space that allows the unfixed portion to fold next to the fixed portion of the wing.

In operation **1376**, the first hinge member of the rotating portion may connect the rotating portion to the drop portion. Connecting the rotating portion to the drop portion may allow for the drop portion to rotate along with the rotating portion in transition between the flight position and the folded position.

In operation **1378**, the second hinge member of the drop portion may connect the drop portion to the rotating portion. Connecting the drop portion to the rotating portion may allow for the drop portion to rotate along with the rotating portion in transition between the flight position and the folded position. In an alternative embodiment, the hinge of the wing fold system may connect the drop portion to the fixed portion with the link connecting between the drop portion and the rotating portion.

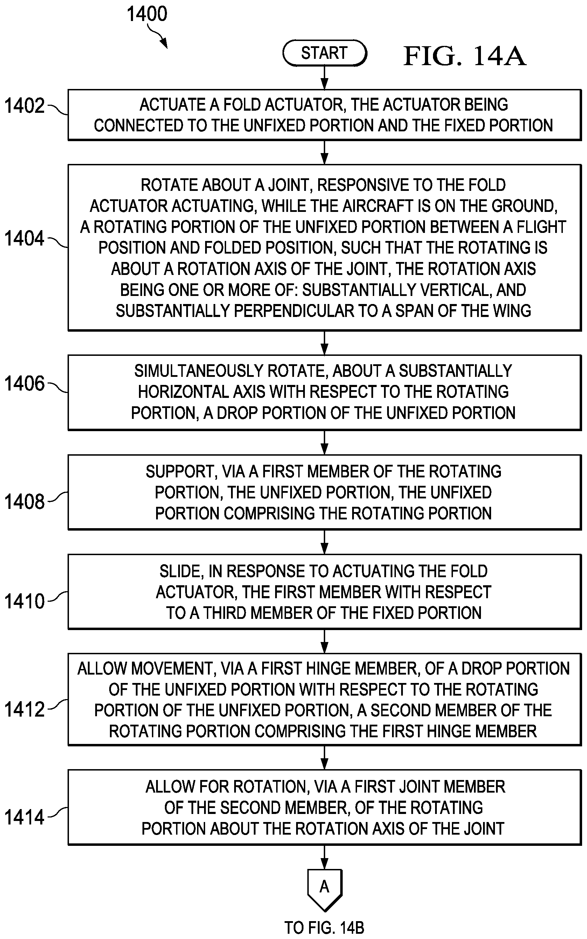

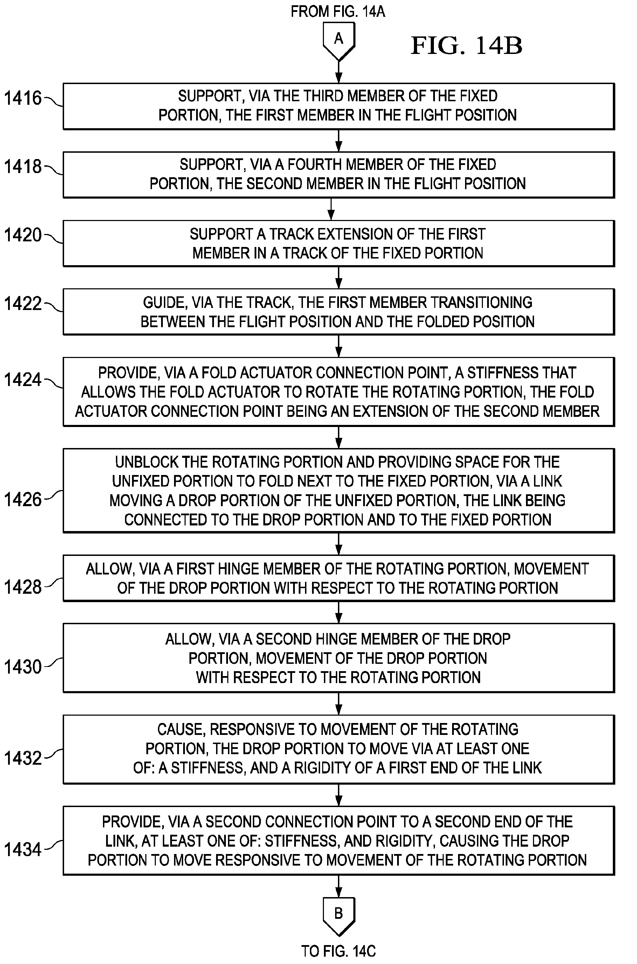

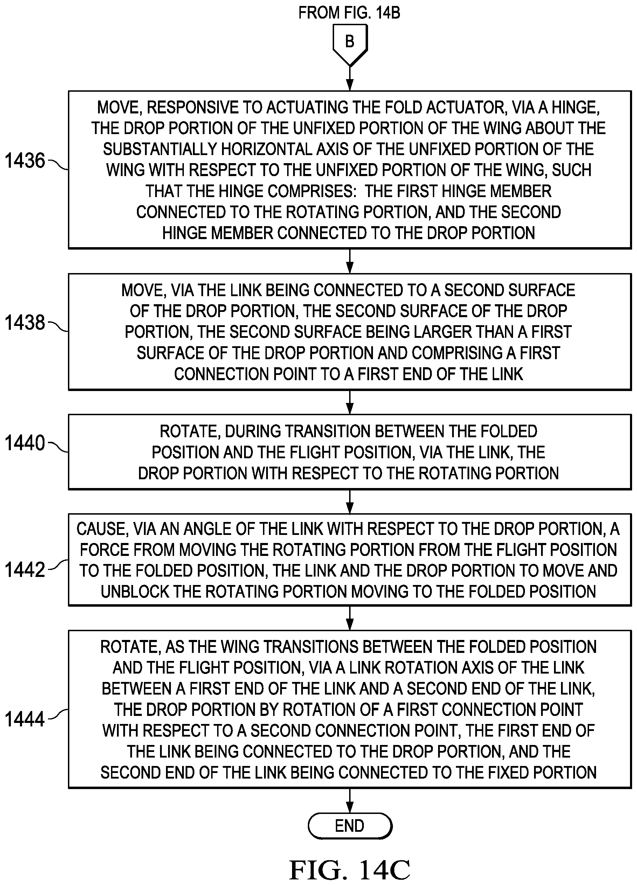

Referring now to **Figures 14A** - **14C**, **Figures 14A** - **14C** are illustrations of a method of folding a wing of an aircraft in accordance with an illustrative embodiment; **Figure 14A** shows operations **1402** to **1414** of the method; **Figure 14B** shows operations **1416** to **1434** of the method; **Figure 14C** shows operations **1436** to **1444** of the method. More specifically, method **1400** may be a method of folding a wing of an aircraft comprising an unfixed portion and a fixed portion.

Method **1400** may include operations listed below. Method **1400** may start with operation **1402** and end after operation **1444**. Operations listed for method **1400** may be performed in an order other than that presented. Some operations may be performed simultaneously. Some operations may be omitted. Operations other than those listed may be added. Performance of some operations, or ordering of operations, may be dependent upon a beginning state of the wing, such as a flight position or a folded position, or being in transition between states.

Method **1400** may begin by actuating a fold actuator, the actuator being connected to the unfixed portion and the fixed portion (operation **1402**). Method **1400** may include, rotating about a joint, responsive to the fold actuator actuating while the aircraft may be on the ground, a rotating portion of the unfixed portion between a flight position and folded position, such that the rotating may be about a rotation axis of the joint, the rotation axis being one or more of: substantially vertical, and substantially perpendicular to a span of the wing (operation **1404**).

Method **1400** may include simultaneously rotating, about a substantially horizontal axis with respect to the rotating portion, a drop portion of the unfixed portion (operation **1406**).

Method **1400** may include supporting, via a first member of the rotating portion, the unfixed portion, the unfixed portion comprising the rotating portion (operation **1408**). Additionally, method **1400** may include sliding, in response to actuating the fold actuator, the first member with respect to a third member of the fixed portion (operation **1410**).

Method **1400** may include allowing movement, via a first hinge member, of a drop portion of the unfixed portion with respect to the rotating portion of the unfixed portion, a second member of the rotating portion comprising the first hinge member (operation **1412**). Method **1400** may also include allowing for rotation, via a first joint member of the second member, of the rotating portion about the rotation axis of the joint (operation **1414)** .

Method **1400** may include supporting, via the third member of the fixed portion, the first member in the flight position (operation **1416**). Method **1400** may also include supporting, via a fourth member of the fixed portion, the second member in the flight position (operation **1418**). Additionally, method **1400** may include supporting a track extension of the first member in a track of the fixed portion (operation **1420**).

Accordingly, method **1400** may include guiding, via the track, the first member transitioning between the flight position and the folded position (operation **1422**). Method **1400** may also include providing, via a fold actuator connection point, a stiffness that allows the fold actuator to rotate the rotating portion, the fold actuator connection point being an extension of the second member (operation **1424**).

Additionally, method **1400** may include unblocking the rotating portion and providing space for the unfixed portion to fold next to the fixed portion, via a link moving a drop portion of the unfixed portion, the link being connected to the drop portion and to the fixed portion (operation **1426**). Method **1400** may further include allowing, via a first hinge member of the rotating portion, movement of the drop portion with respect to the rotating portion (operation **1428**) and allowing, via a second hinge member of the drop portion, movement of the drop portion with respect to the rotating portion (operation **1430**); thus causing, responsive to movement of the rotating portion, the drop portion to move via at least one of: a stiffness, and a rigidity of a first end of the link (operation **1432**); and providing, via a second connection point to a second end of the link, at least one of: stiffness, and rigidity, causing the drop portion to move responsive to movement of the rotating portion (operation **1434**).

Method **1400** may include moving, responsive to actuating the fold actuator, via a hinge, the drop portion of the unfixed portion of the wing about a horizontal axis of the unfixed portion of the wing with respect to the unfixed portion of the wing, such that the hinge comprises: the first hinge member connected to the rotating portion, and the second hinge member connected to the drop portion (operation **1436**). Method **1400** may also include moving, via the link being connected to a second surface of the drop portion, the second surface of the drop portion, the second surface being larger than a first surface of the drop portion and comprising a first connection point to a first end of the link (operation **1438**).

Method **1400** may include rotating, during transition between the folded position and the flight position, via the link, the drop portion with respect to the rotating portion (operation **1440**). Method **1400** may also include causing, via an angle of the link with respect to the drop portion, a force from moving the rotating portion from the flight position to the folded position, the link and the drop portion to move and unblock the rotating portion moving to the folded position (operation **1442**).

Additionally, method **1400** may include rotating, as the wing transitions between the folded position and the flight position, via a link rotation axis of the link between a first end of the link and a second end of the link, the drop portion by rotation of a first connection point with respect to a second connection point, the first end of the link being connected to the drop portion, and the second end of the link being connected to the fixed portion (operation **1444**).

Method **1400** may also include reducing drag and increasing lift of the wing, and increase efficiency of the aircraft, via increasing a wingspan of the wing, via a wingtip of the unfixed portion and controlling, via moveable control surfaces, an aerodynamic shape of the wing. Method **1400** may also include transferring a load from the unfixed portion to a wing box of the fixed portion via a first member of the unfixed portion contacting a third member of the fixed portion.

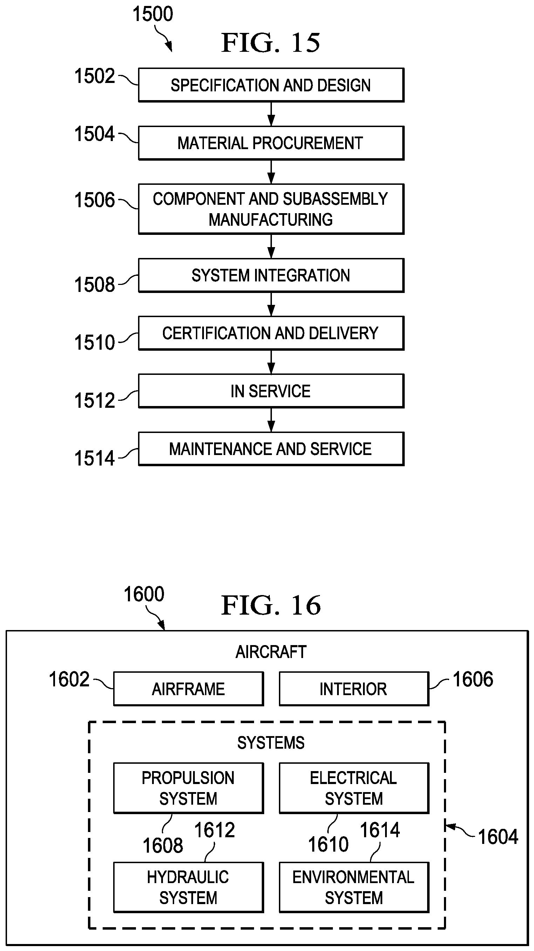

Illustrative embodiments of the disclosure may be described in the context of aircraft manufacturing and service method **1500** as shown in **Figure 15** and aircraft **1600** as shown in **Figure 16**. Turning first to **Figure 15**, **Figure 15** is an illustration of an aircraft manufacturing and service method in accordance with an illustrative embodiment. During pre-production, aircraft manufacturing and service method **1500** may include specification and design **1502** of aircraft **1600** in **Figure 16** and material procurement **1504**.

During production, component and subassembly manufacturing **1506** and system integration **1508** of aircraft **1600** in **Figure 16** takes place. Thereafter, aircraft **1600** in **Figure 16** may go through certification and delivery **1510** in order to be placed in service **1512**. While in service **1512** by a customer, aircraft **1600** in **Figure 16** may be scheduled for routine maintenance and service **1514**, which may include modification, reconfiguration, refurbishment, and other maintenance or servicing.

Each of the processes of aircraft manufacturing and service method **1500** may be performed or carried out by one or more of a system integrator, a third party, or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an ailline, a leasing company, a military entity, a service organization, and so on.

With reference now to **Figure 16**, **Figure 16** is an illustration of an aircraft in which an illustrative embodiment may be implemented. In this example, aircraft **1600** may be produced by aircraft manufacturing and service method **1500** in **Figure 15** and may include airframe **1602** with plurality of systems **1604** and interior **1606**. Examples of systems **1604** include one or more of propulsion system **1608**, electrical system **1610**, hydraulic system **1612**, and environmental system **1614**. Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1500** in **Figure 15**.

In one illustrative example, components or subassemblies produced in component and subassembly manufacturing **1506** in **Figure 15** may be fabricated or manufactured in a manner similar to components or subassemblies produced while aircraft **1600** may be in service **1512** in **Figure 15**. As yet another example, one or more apparatus embodiments, method embodiments, or a combination thereof may be utilized during production stages, such as component and subassembly manufacturing **1506** and system integration **1508** in **Figure 15**. One or more apparatus embodiments, method embodiments, or a combination thereof may be utilized while aircraft **1600** may be one or more of in service **1512** and during maintenance and service **1512** in **Figure 15**. The use of a number of the different illustrative embodiments may substantially expedite the assembly of and/or reduce the cost of aircraft **1600**.

The flowcharts and block diagrams in the different depicted illustrative embodiments illustrate the architecture, functionality, and operation of some possible implementations of apparatuses and methods in an illustrative embodiment. In this regard, each block in the flowcharts or block diagrams may represent a module, a segment, a function, and/or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, blocks may be removed from and other blocks may be added in addition to the illustrated blocks in a flowchart or block diagram.

The description of the different illustrative embodiments has been presented for purposes of illustration and description, and may be not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. An apparatus for an aircraft (300), the apparatus comprising:
a wing (302) comprising: an unfixed portion (402), and a fixed portion (502);
the unfixed portion (402) movably connected to the fixed portion (502), the unfixed portion (402) comprising a rotating portion (406) of the unfixed portion (402), the rotating portion (406) configured to rotate between a flight position (304) and a folded position (306); and
a joint (332) configured to allow rotation of the unfixed portion (402) of the wing (302) with respect to the fixed portion (502) of the wing (302) about a rotation axis (338), the rotation axis (338) being one or more of: vertical, substantially perpendicular to the wing (302), and configured to be substantially parallel to a yaw axis of an aircraft (300), the apparatus being **characterised in that** it further comprises:
a first member (408) of the rotating portion (406) configured to: support the unfixed portion (402), connect the unfixed portion (402) to the fixed portion (502), and slide into a third member (508) of the fixed portion (502);
a second member (412) of the rotating portion (406) comprising a first hinge member (422), a fold actuator connection point (418), and a first joint member (420);
the first hinge member (422) configured to allow movement of a drop portion (424) of the unfixed portion (402) with respect to the rotating portion (406) of the unfixed portion (402);
the first joint member (420) configured to allow for rotation of the rotating portion (406) about the rotation axis (338) of the joint and connect to a second joint member (516) of the fixed portion (502);
the third member (508) of the fixed portion (502) configured to support the first member (408) in the flight position (304); and
a fourth member (510) of the fixed portion (502) configured to support the second member (412) in the flight position (304).

2. The apparatus of claim 1, further comprising:
a track extension (410) of the first member (408) configured to fit into a track (514) of the fixed portion (502), and support and guide the first member (408)in: the flight position (304), the folded position (306), and transition between the flight position (304) and the folded position (306); and
the fold actuator connection point (418) configured to: connect the rotating portion (406) to a fold actuator (520), provide a stiffness that allows the rotating portion (406) to move, and form an extension of the second member (412).

3. The apparatus of any preceding claim, further comprising:
a drop portion (424) configured to move to a location that: unblocks the rotating portion (406), and provides space for the unfixed portion (402) to fold next to the fixed portion (502);
a first hinge member (422) of the rotating portion (406) configured to allow movement of the drop portion (424) with respect to the rotating portion (406);
a second hinge member (426) of the drop portion (424) configured to allow movement of the drop portion (424) with respect to the rotating portion (406);
a first connection point (428) of the drop portion (424) configured to connect the drop portion (424) to a first end (324) of a link (322);
the first connection point (428) configured to provide at least one of: stiffness, and rigidity, to cause the drop portion (424) to move responsive to movement of the rotating portion (406);
a second connection point (518) of the fixed portion (502), the second connection point (518) connected to a second end (326) of the link (322) and configured to provide at least one of: stiffness, and rigidity, to cause the drop portion (424) to move, responsive to movement of the rotating portion (406);
a hinge (340) configured to allow movement of the drop portion (424) of the unfixed portion (402) of the wing (302) about a substantially horizontal axis of the unfixed portion (402) of the wing (302) with respect to the unfixed portion (402) of the wing (302), the hinge (340) comprising:
the first hinge member (422) configured to connect the rotating portion (406) to the drop portion (424);
the second hinge member (426) configured to connect the drop portion (424) to the rotating portion (406);
a first surface (430) of the drop portion (424); and
a second surface (432) of the drop portion (424), the second surface (432) configured to connect the drop portion (424) to the link (322), the second surface (432) being larger than the first surface (430); and
the link (322) configured to cause rotation of the drop portion (424) with respect to the rotating portion (406) during transition between the folded position (306) and the flight position (304).

4. The apparatus of claim 1, wherein the wing (302) is configured to be attached to an aircraft (300).

5. A method of folding a wing (302) of an aircraft (300) comprising an unfixed portion (402) and a fixed portion (502), the method comprising:
actuating a fold actuator (520), the actuator (520) being connected to the unfixed portion (402) and the fixed portion (502);
rotating about a joint (332), responsive to the fold actuator (520) actuating, a rotating portion (406) of the unfixed portion (402) between a flight position (304) and folded position (306), such that the rotating is about a rotation axis (338) of the joint (332), the rotation axis (338) being one or more of: substantially vertical, and substantially perpendicular to a span of the wing (302); and
simultaneously rotating, about a substantially horizontal axis with respect to the rotating portion (406), a drop portion (424) of the unfixed portion (402), the method further comprising:
supporting, via a first member (408) of the rotating portion (406), the unfixed portion (402), the unfixed portion (402) comprising the rotating portion (406);
sliding, in response to actuating the fold actuator (520), the first member (408) with respect to a third member (508) of the fixed portion (502);
allowing movement, via a first hinge member (422), of the drop portion (424) of the unfixed portion (402) with respect to the rotating portion (406) of the unfixed portion (402), a second member (412) of the rotating portion (406) comprising the first hinge member (422);
allowing for rotation, via a first joint member (420) of the second member (412), of the rotating portion (406) about the rotation axis (338) of the joint (332);
supporting, via the third member (508) of the fixed portion (502), the first member (408) in the flight position (304); and
supporting, via a fourth member (510) of the fixed portion (502), the second member (412) in the flight position (304).

6. The method of claim 5, further comprising;
supporting a track extension (410) of a first member (408) in a track (514) of the fixed portion (502); and
guiding, via the track (514), the first member (408) transitioning between the flight position (304) and the folded position (306).

7. The method of claim 5 or 6, further comprising;
providing, via a fold actuator connection point (418), a stiffness that allows the fold actuator (520) to rotate the rotating portion (406), the fold actuator connection point (418) being an extension of a second member (412).

8. The method of any of claims 5 to 7, further comprising:
unblocking the rotating portion (406) and providing space for the unfixed portion (402) to fold next to the fixed portion (502), via a link (322) moving the drop portion (424) of the unfixed portion (402), the link (322) being connected to the drop portion (424) and to the fixed portion (502).

9. The method of any of claims 5 to 8, further comprising:
allowing, via a first hinge member (422) of the rotating portion (406), movement of the drop portion (424) with respect to the rotating portion (406);
allowing, via a second hinge member (426) of the drop portion (424), movement of the drop portion (424) with respect to the rotating portion (406);
causing, responsive to movement of the rotating portion (406), the drop portion (424) to move via at least one of: a stiffness, and a rigidity of a first end (324) of a link (322); and
providing, via a second connection point (518) to a second end (326) of the link (322), at least one of: stiffness, and rigidity, causing the drop portion (424) to move responsive to movement of the rotating portion (406) .

10. The method of any of claims 5 to 9, further comprising:
moving, responsive to actuating the fold actuator (520), via a hinge (340), the drop portion (424) of the unfixed portion (402) of the wing (302) about the substantially horizontal axis of the unfixed portion (402) of the wing (302) with respect to the unfixed portion (402) of the wing (302), such that the hinge (340) comprises: the first hinge member (422) connected to the rotating portion (406), and the second hinge member (426) connected to the drop portion (424).

11. The method of any of claims 5 to 10, further comprising:
moving, via a link (322) being connected to a second surface (432) of the drop portion (424), the second surface (432) of the drop portion (424), the second surface (432) being larger than a first surface (430) of the drop portion (424) and comprising a first connection point (428) to a first end (324) of the link (322).

12. The method of any of claims 5 to 11, further comprising:
rotating, during transition between the folded position (306) and the flight position (304), via a link (322), the drop portion (424) with respect to the rotating portion (406).

13. The method of any of claims 5 to 12, further comprising:
causing, via an angle of a link (322) with respect to the drop portion (424), a force from moving the rotating portion (406) from the flight position (304) to the folded position (306), the link (322) and the drop portion (424) to move and unblock the rotating portion (406) moving to the folded position (306).

14. The method of any of claims 5 to 13, further comprising:
rotating, as the wing (302) transitions between the folded position (306) and the flight position (304), via a link rotation axis (338) of a link (322) between a first end (324) of the link (322) and a second end (326) of the link (322), the drop portion (424) by rotation of a first connection point (428) with respect to a second connection point(518), the first end (324) of the link (322) being connected to the drop portion (424), and the second end (326) of the link (322) being connected to the fixed portion (502).

## Patentansprüche

1. Vorrichtung für ein Flugzeug (300), wobei die Vorrichtung umfasst:
einen Flügel (302) mit einem nicht festen Abschnitt (402) und einem festen Abschnitt (502);
wobei der nicht feste Abschnitt (402) beweglich mit dem festen Abschnitt (502) verbunden ist, wobei der nicht feste Abschnitt (402) einen rotierenden Abschnitt (406) des nicht festen Abschnitts (402) umfasst, wobei der rotierende Abschnitt (406) konfiguriert ist, um sich zwischen einer Flugposition (304) und einer eingeklappten Position (306) zu drehen; und
ein Gelenk (332), das konfiguriert ist, um eine Drehung des nicht festen Abschnitts (402) des Flügels (302) in Bezug auf den festen Abschnitt (502) des Flügels (302) um eine Drehachse (338) zu ermöglichen, wobei die Drehachse (338) vertikal und/oder im Wesentlichen senkrecht zum Flügel (302) und/oder konfiguriert ist, um im Wesentlichen parallel zu einer Gierachse eines Flugzeugs (300) zu sein,
wobei die Vorrichtung **dadurch gekennzeichnet ist, dass** sie ferner umfasst:
ein erstes Element (408) des rotierenden Abschnitts (406), das konfiguriert ist, um: den nicht festen Abschnitt (402) zu halten, den nicht festen Abschnitt (402) mit dem festen Abschnitt (502) zu verbinden und in ein drittes Element (508) des festen Abschnitts (502) zu gleiten;
ein zweites Element (412) des rotierenden Abschnitts (406), das ein erstes Scharnierelement (422), einen Einklappstellglied-Verbindungspunkt (418) und ein erstes Gelenkelement (420) umfasst;
wobei das erste Scharnierelement (422) konfiguriert ist, um eine Bewegung eines Fallabschnitts (424) des nicht festen Abschnitts (402) in Bezug auf den rotierenden Abschnitt (406) des nicht festen Abschnitts (402) zu ermöglichen;
das erste Gelenkelement (420) konfiguriert ist, um eine Drehung des rotierenden Abschnitts (406) um die Drehachse (338) des Gelenks zu ermöglichen und mit einem zweiten Gelenkelement (516) des festen Abschnitts (502) zu verbinden;
das dritte Element (508) des festen Abschnitts (502) konfiguriert ist, um das erste Element (408) in der Flugposition (304) zu halten; und
ein viertes Element (510) des festen Abschnitts (502) konfiguriert ist, um das zweite Element (412) in der Flugposition (304) zu halten.

2. Vorrichtung nach Anspruch 1, ferner mit
einer Schienenverlängerung (410) des ersten Elements (408), die konfiguriert ist, um in eine Schiene (514) des festen Abschnitts (502) zu passen und das erste Element (408) in: der Flugposition (304), der eingeklappten Position (306) und dem Übergang zwischen der Flugposition (304) und der eingeklappten Position (306) zu halten und zu führen; wobei
der Einklappstellglied-Verbindungspunkt (418) konfiguriert ist, um: den rotierenden Abschnitt (406) mit einem Einklappstellglied (520) zu verbinden, eine Steifigkeit bereitzustellen, die es dem rotierenden Abschnitt (406) ermöglicht, sich zu bewegen, und eine Verlängerung des zweiten Elements (412) zu bilden.

3. Vorrichtung nach einem der vorhergehenden Ansprüche, ferner umfassend:
einen Fallabschnitt (424), der konfiguriert ist, um sich zu einer Position zu bewegen, die: den rotierenden Abschnitt (406) entblockt und Platz für den nicht festen Abschnitt (402) bietet, um neben den festen Abschnitt (502) zu klappen;
ein erstes Scharnierelement (422) des rotierenden Abschnitts (406), das konfiguriert ist, um eine Bewegung des Fallabschnitts (424) in Bezug auf den rotierenden Abschnitt (406) zu ermöglichen;
ein zweites Scharnierelement (426) des Fallabschnitts (424), das konfiguriert ist, um eine Bewegung des Fallabschnitts (424) in Bezug auf den rotierenden Abschnitt (406) zu ermöglichen;
einen ersten Verbindungspunkt (428) des Fallabschnitts (424), der konfiguriert ist, um den Fallabschnitt (424) mit einem ersten Ende (324) eines Lenkers (322) zu verbinden;
wobei der erste Verbindungspunkt (428) konfiguriert ist, um Steifigkeit und/oder Starrheit bereitzustellen, um zu bewirken, dass sich der Fallabschnitt (424) als Reaktion auf die Bewegung des rotierenden Abschnitts (406) bewegt;
einen zweiten Verbindungspunkt (518) des festen Abschnitts (502), wobei der zweite Verbindungspunkt (518) mit einem zweiten Ende (326) des Lenkers (322) verbunden und konfiguriert ist, um Steifigkeit und/oder Starrheit bereitzustellen, um zu bewirken, dass sich der Fallabschnitt (424) als Reaktion auf die Bewegung des rotierenden Abschnitts (406) bewegt;
ein Scharnier (340), das konfiguriert ist, um eine Bewegung des Fallabschnitts (424) des nicht festen Abschnitts (402) des Flügels (302) um eine im Wesentlichen horizontale Achse des nicht festen Abschnitts (402) des Flügels (302) in Bezug auf den nicht festen Abschnitt (402) des Flügels (302) zu ermöglichen, wobei das Scharnier (340) umfasst:
das erste Scharnierelement (422), das konfiguriert ist, um den rotierenden Abschnitt (406) mit dem Fallabschnitt (424) zu verbinden;
das zweite Scharnierelement (426), das konfiguriert ist, um den Fallabschnitt (424) mit dem rotierenden Abschnitt (406) zu verbinden;
eine erste Oberfläche (430) des Fallabschnitts (424); und
eine zweite Oberfläche (432) des Fallabschnitts (424), wobei die zweite Oberfläche (432) konfiguriert ist, um den Fallabschnitt (424) mit dem Lenker (322) zu verbinden, wobei die zweite Oberfläche (432) größer als die erste Oberfläche (430) ist; und
der Lenker (322) konfiguriert ist, um eine Drehung des Fallabschnitts (424) in Bezug auf den rotierenden Abschnitt (406) während des Übergangs zwischen der eingeklappten Position (306) und der Flugposition (304) zu bewirken.

4. Vorrichtung nach Anspruch 1, bei der der Flügel (302) konfiguriert ist, um an einem Flugzeug (300) befestigt zu sein.

5. Verfahren zum Einklappen eines Flügels (302) eines Flugzeugs (300), der einen nicht festen Abschnitt (402) und einen festen Abschnitt (502) umfasst, wobei das Verfahren umfasst:
Betätigen eines Einklappstellglieds (520), wobei das Stellglied (520) mit dem nicht festen Abschnitt (402) und dem festen Abschnitt (502) verbunden ist;
in Reaktion auf das Betätigen des Einklappstellglieds (520), Drehen eines rotierenden Abschnitts (406) des nicht festen Abschnitts (402) zwischen einer Flugposition (304) und einer eingeklappten Position (306), so dass die Drehung um eine Drehachse (338) des Gelenks (332) erfolgt, wobei die Drehachse (338) im Wesentlichen vertikal und/oder im Wesentlichen senkrecht zu einer Spannweite des Flügels (302) ist; und
gleichzeitiges Drehen eines Fallabschnitts (424) des nicht festen Abschnitts (402) um eine im Wesentlichen horizontale Achse in Bezug auf den rotierenden Abschnitt (406),
wobei das Verfahren ferner umfasst:
Halten des nicht festen Abschnitts (402) über ein erstes Element (408) des rotierenden Abschnitts (406), wobei der nicht feste Abschnitt (402) den rotierenden Abschnitt (406) umfasst;
Verschieben des ersten Elements (408) in Bezug auf ein drittes Element (508) des festen Abschnitts (502) als Reaktion auf das Betätigen des Einklappstellglieds (520);
Zulassen einer Bewegung des Fallabschnitts (424) des nicht festen Abschnitts (402) in Bezug auf den rotierenden Abschnitt (406) des nicht festen Abschnitts (402) über ein erstes Scharnierelement (422), wobei ein zweites Element (412) des rotierenden Abschnitts (406) das erste Scharnierelement (422) umfasst;
Zulassen einer Drehung des rotierenden Abschnitts (406) um die Drehachse (338) des Gelenks (332) über ein erstes Gelenkelement (420) des zweiten Elements (412);
Halten des ersten Elements (408) in der Flugposition (304) über das dritte Element (508) des festen Abschnitts (502); und
Halten des zweiten Elements (412) in der Flugposition (304) über ein viertes Element (510) des festen Abschnitts (502).

6. Verfahren nach Anspruch 5, ferner umfassend:
Halten einer Schienenverlängerung (410) eines ersten Elements (408) in einer Schiene (514) des festen Abschnitts (502); und
Führen des ersten Elements (408) beim Übergehen zwischen der Flugposition (304) und der eingeklappten Position (306) über die Schiene (514).

7. Verfahren nach Anspruch 5 oder 6, ferner umfassend:
Bereitstellen einer Steifigkeit , die es dem Einklappstellglied (520) ermöglicht, den rotierenden Abschnitt (406) zu drehen, über einen Einklappstellglied-Verbindungspunkt (418), wobei der Einklappstellglied-Verbindungspunkt (418) eine Verlängerung eines zweiten Elements (412) ist.

8. Verfahren nach einem der Ansprüche 5 bis 7, ferner umfassend:
Entsperren des rotierenden Abschnitts (406) und Schaffen von Platz für den nicht festen Abschnitt (402), um neben den festen Abschnitt (502) zu klappen, mittels eines Lenkers (322), der den Fallabschnitt (424) des nicht festen Abschnitts (402) bewegt, wobei der Lenker (322) mit dem Fallabschnitt (424) und mit dem festen Abschnitt (502) verbunden ist.

9. Verfahren nach einem der Ansprüche 5 bis 8, ferner umfassend:
Zulassen einer Bewegung des Fallabschnitts (424) in Bezug auf den rotierenden Abschnitt (406) mittels eines ersten Scharnierelements (422) des rotierenden Abschnitts (406);
Zulassen einer Bewegung des Fallabschnitts (424) in Bezug auf den rotierenden Abschnitt (406) mittels eines zweiten Scharnierelements (426) des Fallabschnitts (424);
Bewirken, dass sich der Fallabschnitt (424) als Reaktion auf die Bewegung des rotierenden Abschnitts (406) bewegt, durch mindestens eines von: einer Steifigkeit und einer Starrheit eines ersten Endes (324) eines Lenkers (322); und
Bereitstellen von Steifigkeit und/oder Starrheit, die bewirkt, dass der Fallabschnitt (424) sich als Reaktion auf die Bewegung des rotierenden Abschnitts (406) bewegt, mittels eines zweiten Verbindungspunkts (518) an einem zweiten Ende (326) des Lenkers (322).

10. Verfahren nach einem der Ansprüche 5 bis 9, ferner umfassend:
in Reaktion auf die Betätigung des Einklappstellglieds (520), Bewegen des Fallabschnitts (424) des nicht festen Abschnitts (402) des Flügels (302) mittels eines Scharniers (340) um die im Wesentlichen horizontale Achse des nicht festen Abschnitts (402) des Flügels (302) in Bezug auf den nicht festen Abschnitt (402) des Flügels (302), so dass das Scharnier (340) umfasst: das erste Scharnierelement (422), das mit dem rotierenden Abschnitt (406) verbunden ist, und das zweite Scharnierelement (426), das mit dem Fallabschnitt (424) verbunden ist.

11. Verfahren nach einem der Ansprüche 5 bis 10, ferner umfassend:
Bewegen der zweiten Oberfläche (432) des Fallabschnitts (424) mittels eines Lenkers (322), der mit einer zweiten Oberfläche (432) des Fallabschnitts (424) verbunden ist, wobei die zweite Oberfläche (432) größer als eine erste Oberfläche (430) des Fallabschnitts (424) ist und einen ersten Verbindungspunkt (428) zu einem ersten Ende (324) des Lenkers (322) umfasst.

12. Verfahren nach einem der Ansprüche 5 bis 11, ferner umfassend:
Drehen des Fallabschnitts (424) in Bezug auf den rotierenden Abschnitt (406) während des Übergangs zwischen der eingeklappten Position (306) und der Flugposition (304) mittels eines Lenkers (322).

13. Verfahren nach einem der Ansprüche 5 bis 12, ferner umfassend:
Verursachen, über einen Winkel eines Lenkers (322) in Bezug auf den Fallabschnitt (424), dass eine Kraft den rotierenden Abschnitt (406) aus der Flugposition (304) in die eingeklappte Position (306) bewegt, dass sich der Lenker (322) und der Fallabschnitt (424) bewegen und die Bewegung des rotierenden Abschnitt (406) in die eingeklappte Position (306) freigeben.

14. Verfahren nach einem der Ansprüche 5 bis 13, ferner umfassend: wenn der Flügel (302) zwischen der eingeklappten Position (306) und der Flugposition (304) übergeht, Drehen des Fallabschnitts (424), mittels einer Lenkerdrehachse (338) eines Lenkers (322) zwischen einem ersten Ende (324) des Lenkers (322) und einem zweiten Ende (326) des Lenkers (322), durch Drehen eines ersten Verbindungspunktes (428) in Bezug auf einen zweiten Verbindungspunkt (518), wobei das erste Ende (324) des Lenkers (322) mit dem Fallabschnitt (424) verbunden ist und das zweite Ende (326) des Lenkers (322) mit dem festen Abschnitt (502) verbunden ist.

## Revendications

1. Appareil destiné à un avion (300), l'appareil comprenant :
une aile (302) comprenant : une partie non fixe (402), et une partie fixe (502) ;
la partie non fixe (402) étant reliée de manière mobile à la partie fixe (502), la partie non fixe (402) comprenant une partie rotative (406) de la partie non fixe (402), la partie rotative (406) étant configurée pour tourner entre une position de vol (304) et une position repliée (306) ; et
une jonction (332) configurée pour permettre la rotation de la partie non fixe (402) de l'aile (302) par rapport à la partie fixe (502) de l'aile (302) autour d'un axe de rotation (338), l'axe de rotation (338) étant une ou plusieurs de ce qui suit : vertical, sensiblement perpendiculaire à l'aile (302), et configuré pour être sensiblement parallèle à un axe de lacet d'un avion (300), l'appareil étant **caractérisé en ce qu'**il comprend en outre :
un premier élément (408) de la partie rotative (406) configuré pour : supporter la partie non fixe (402), relier la partie non fixe (402) à la partie fixe (502), et coulisser dans un troisième élément (508) de la partie fixe (502) ;
un second élément (412) de la partie rotative (406) comprenant un premier élément de charnière (422), un point de liaison de système de repli (418), et un premier élément de jonction (420) ;
le premier élément de charnière (422) étant configuré pour permettre le mouvement d'une partie de fléchissement (424) de la partie non fixe (402) par rapport à la partie rotative (406) de la partie non fixe (402) ;
le premier élément de jonction (420) étant configuré pour permettre la rotation de la partie rotative (406) autour de l'axe de rotation (338) de la jonction et pour être relié à un second élément de jonction (516) de la partie fixe (502) ;
le troisième élément (508) de la partie fixe (502) étant configuré pour supporter le premier élément (408) dans la position de vol (304) ; et
un quatrième élément (510) de la partie fixe (502) configuré pour supporter le second élément (412) dans la position de vol (304).

2. Appareil selon la revendication 1, comprenant en outre :
une extension de rail (410) du premier élément (408) configurée pour se placer dans un rail (514) de la partie fixe (502), et pour supporter et guider le premier élément (408) dans : la position de vol (304), la position repliée (306), et pour passer entre la position de vol (304) et la position repliée (306) ; et
le point de liaison de système de repli (418) étant configuré pour : relier la partie rotative (406) à un système de repli (520), offrir une rigidité qui permet à la partie rotative (406) de se déplacer, et former une extension du second élément (412).

3. Appareil selon l'une quelconque des revendications précédentes, comprenant en outre :
une partie de fléchissement (424) configurée pour se déplacer jusqu'à un emplacement qui : débloque la partie rotative (406), et qui offre un espace pour la partie non fixe (402) afin de se replier près de la partie fixe (502) ;
un premier élément de charnière (422) de la partie rotative (406) configuré pour permettre le mouvement de la partie de fléchissement (424) par rapport à la partie rotative (406) ;
un second élément de charnière (426) de la partie de fléchissement (424) configuré pour permettre le mouvement de la partie de fléchissement (424) par rapport à la partie rotative (406) ;
un premier point de liaison (428) de la partie de fléchissement (424) configuré pour relier la partie de fléchissement (424) à une première extrémité (324) d'une liaison (322) ;
le premier point de liaison (428) configuré pour offrir au moins l'un de ce qui suit : une raideur, et une rigidité, afin que la partie de fléchissement (424) puisse se déplacer en réponse au mouvement de la partie rotative (406) ;
un second point de liaison (518) de la partie fixe (502), le second point de liaison (518) étant relié à une seconde extrémité (326) de la liaison (322) et configuré pour offrir au moins l'un de ce qui suit : une raideur, et une rigidité, afin que la partie de fléchissement (424) puisse se déplacer, en réponse au mouvement de la partie rotative (406) ;
une charnière (340) configurée pour permettre le mouvement de la partie de fléchissement (424) de la partie non fixe (402) de l'aile (302) autour d'un axe sensiblement horizontal de la partie non fixe (402) de l'aile (302) par rapport à la partie non fixe (402) de l'aile (302), la charnière (340) comprenant :
le premier élément de charnière (422) configuré pour relier la partie rotative (406) à la partie de fléchissement (424) ;
le second élément de charnière (426) configuré pour relier la partie de fléchissement (424) à la partie rotative (406) ;
une première surface (430) de la partie de fléchissement (424) ; et
une seconde surface (432) de la partie de fléchissement (424), la seconde surface (432) étant configurée pour relier la partie de fléchissement (424) à la liaison (322), la seconde surface (432) étant plus grande que la première surface (430) ; et
la liaison (322) étant configurée pour provoquer la rotation de la partie de fléchissement (424) par rapport à la partie rotative (406) pendant le passage entre la position repliée (306) et la position de vol (304).

4. Appareil selon la revendication 1, dans lequel l'aile (302) est configurée pour être fixée sur un avion (300).

5. Procédé de repliement d'une aile (302) d'un avion (300) comprenant une partie non fixe (402) et une partie fixe (502), le procédé comprenant :
l'actionnement d'un système de repli (520), le système (520) étant relié à la partie non fixe (402) et à la partie fixe (502) ;
la rotation autour d'une jonction (332), en réponse au système de repli (520) qui se déclenche, d'une partie rotative (406) de la partie non fixe (402) entre une position de vol (304) et une position repliée (306), de sorte que la rotation s'effectue autour d'un axe de rotation (338) de la jonction (332), l'axe de rotation (338) étant un ou plusieurs de ce qui suit : sensiblement vertical, et sensiblement perpendiculaire à une envergure de l'aile (302) ;
et
la rotation simultanée, autour d'un axe sensiblement horizontal par rapport à la partie rotative (406), d'une partie de fléchissement (424) de la partie non fixe (402), le procédé comprenant en outre :
le support, via un premier élément (408) de la partie rotative (406), de la partie non fixe (402), la partie non fixe (402) comprenant la partie rotative (406) ;
le coulissement, en réponse au déclenchement du système de repli (520), du premier élément (408) par rapport à un troisième élément (508) de la partie fixe (502) ;
le fait de permettre le mouvement, via un premier élément de charnière (422), de la partie de fléchissement (424) de la partie non fixe (402) par rapport à la partie rotative (406) de la partie non fixe (402), un second élément (412) de la partie rotative (406) comprenant le premier élément de charnière (422) ;
le fait de permettre la rotation, via un premier élément de jonction (420) du second élément (412), de la partie rotative (406) autour de l'axe de rotation (338) de la jonction (332) ;
le support, via le troisième élément (508) de la partie fixe (502), du premier élément (408) dans la position de vol (304) ; et
le support, via un quatrième élément (510) de la partie fixe (502), du second élément (412) dans la position de vol (304).

6. Procédé selon la revendication 5, comprenant en outre :
le support d'une extension de rail (410) d'un premier élément (408) dans un rail (514) de la partie fixe (502) ; et
le guidage, via le rail (514), du premier élément (408) qui passe entre la position de vol (304) et la position repliée (306).

7. Procédé selon la revendication 5 ou 6, comprenant en outre :
le fait de prévoir, via un point de liaison de système de repli (418), une rigidité qui permet au système de repli (520) de faire tourner la partie rotative (406), le point de liaison de système de repli (418) étant une extension d'un second élément (412).

8. Procédé selon l'une quelconque des revendications 5 à 7, comprenant en outre :
le déblocage de la partie rotative (406) et le fait de prévoir un espace pour que la partie non fixe (402) se replie près de la partie fixe (502), via une liaison (322) qui déplace la partie de fléchissement (424) de la partie non fixe (402), la liaison (322) étant reliée à la partie de fléchissement (424) et à la partie fixe (502).

9. Procédé selon l'une quelconque des revendications 5 à 8, comprenant en outre :
le fait de permettre, via un premier élément de charnière (422) de la partie rotative (406), le mouvement de la partie de fléchissement (424) par rapport à la partie rotative (406) ;
le fait de permettre, via un second élément de charnière (426) de la partie de fléchissement (424), le mouvement de la partie de fléchissement (424) par rapport à la partie rotative (406) ;
le fait de provoquer, en réponse au mouvement de la partie rotative (406), un mouvement de la partie de fléchissement (424) via au moins l'un de ce qui suit : une raideur, et une rigidité, d'une première extrémité (324) d'une liaison (322) ; et
le fait de prévoir, via un second point de liaison (518) avec une seconde extrémité (326) de la liaison (322), au moins l'un de ce qui suit : une raideur, et une rigidité, qui provoque un mouvement de la partie de fléchissement (424) en réponse au mouvement de la partie rotative (406).

10. Procédé selon l'une quelconque des revendications 5 à 9, comprenant en outre :
le mouvement, en réponse au déclenchement du système de repli (520), via une charnière (340), de la partie de fléchissement (424) de la partie non fixe (402) de l'aile (302) autour de l'axe sensiblement horizontal de la partie non fixe (402) de l'aile (302) par rapport à la partie non fixe (402) de l'aile (302), de sorte que la charnière (340) comprenne : le premier élément de charnière (422) relié à la partie rotative (406), et le second élément de charnière (426) relié à la partie de fléchissement (424).

11. Procédé selon l'une quelconque des revendications 5 à 10, comprenant en outre :
le mouvement, via une liaison (322) reliée à une seconde surface (432) de la partie de fléchissement (424), de la seconde surface (432) de la partie de fléchissement (424), la seconde surface (432) étant plus grande qu'une première surface (430) de la partie de fléchissement (424) et comprenant un premier point de liaison (428) à une première extrémité (324) de la liaison (322).

12. Procédé selon l'une quelconque des revendications 5 à 11, comprenant en outre :
la rotation, pendant le passage entre la position repliée (306) et la position de vol (304), via une liaison (322), de la partie de fléchissement (424) par rapport à la partie rotative (406).

13. Procédé selon l'une quelconque des revendications 5 à 12, comprenant en outre :
le fait de provoquer, via un angle d'une liaison (322) par rapport à la partie de fléchissement (424), une force issue du passage de la partie rotative (406) de la position de vol (304) à la position repliée (306), la liaison (322) et la partie de fléchissement (424) se déplaçant et débloquant la partie rotative (406) qui passe dans la position repliée (306).

14. Procédé selon l'une quelconque des revendications 5 à 13, comprenant en outre :
la rotation, lorsque l'aile (302) passe de la position repliée (306) à la position de vol (304), via un axe de rotation de liaison (338) d'une liaison (322) entre une première extrémité (324) de la liaison (322) et une seconde extrémité (326) de la liaison (322), de la partie de fléchissement (424) par la rotation d'un premier point de liaison (428) par rapport à un second point de liaison (518), la première extrémité (324) de la liaison (322) étant reliée à la partie de fléchissement (424), et la seconde extrémité (326) de la liaison (322) étant reliée à la partie fixe (502).
